# EUROPEAN PATENT APPLICATION

(11) **EP 4 832 245 A1**
(43) Date of publication of application: **28.10.2026**
(21) Application number: 24919918.3
(22) Date of filing: 05.12.2024
(51) Int. Cl.: H01Q 3/32

(54) **FEEDING NETWORK SYSTEM, ANTENNA, BASE STATION AND COMMUNICATION SYSTEM**

(30) Priority: 22.01.2024 CN 202410087081
(71) Applicant: Huawei Technologies Co., Ltd., Shenzhen, Guangdong 518129 (CN)
(72) Inventor: LIU, Xinming, Shenzhen, Guangdong 518129 (CN); HU, Peifeng, Shenzhen, Guangdong 518129 (CN); LI, Jiaxu, Shenzhen, Guangdong 518129 (CN); XIAO, Weihong, Shenzhen, Guangdong 518129 (CN); DAOJIAN, Dingjiu, Shenzhen, Guangdong 518129 (CN)
(74) Representative: MERH-IP Matias Erny Reichl Hoffmann Patentanwälte PartG mbB
(86) International application number: PCT/CN2024/137136
(87) International publication number: WO 2025/156840

(57) **Abstract**

This application provides a feed network system, an antenna, a base station, and a communication system. The feed network system provided in this application includes a feed network and a power mechanism. The feed network includes a first housing, a fixed member, and a sliding member, the fixed member and the sliding member are mounted on the first housing, the fixed member is connected to the first housing, and a functional circuit is disposed on the fixed member. The power mechanism includes a drive apparatus, and the drive apparatus is configured to drive the sliding member to slide relative to the fixed member, to change an electrical parameter of the functional circuit. In the feed network system provided in this application, the feed network and the power mechanism are integrated as a whole. This can help improve an integration degree of the feed network system, implement a miniaturization design of the feed network system, and reduce space occupied by the feed network system in an antenna, thereby reducing antenna design complexity.

## Description

### CROSS-REFERENCE TO RELATED APPLICATIONS

This application claims priority to Chinese Patent Application No. 202410087081.7, filed with the China National Intellectual Property Administration on January 22, 2024 and entitled "FEED NETWORK SYSTEM, ANTENNA, BASE STATION, AND COMMUNICATION SYSTEM", which is incorporated herein by reference in its entirety.

### TECHNICAL FIELD

This application relates to the field of communication technologies, and in particular, to a feed network system, an antenna, a base station, and a communication system.

### BACKGROUND

With the development of mobile communication, the usage rate of mobile terminals is increasing, and network coverage of mobile cellular networks is a key to mobile communication. Because key devices in mobile cellular networks are antennas, to meet different network coverage, the antennas usually use remote electrical tilt systems to adjust signal coverage areas. Currently, purposes of changing the coverage areas of the antennas and optimizing signal coverage regions of the antennas are usually implemented by changing signal radiation tilt angles of the antennas. Adjustment of the signal radiation tilt angles of the antennas is generally to change phase distribution of antenna arrays through phase shifters, to adjust radiation patterns of the antennas, thereby achieving adjustment of the signal coverage areas.

The phase shifters may drive movement of dielectrics of the phase shifters through power mechanisms, to change relative locations of the dielectrics and strips, thereby changing dielectric constants on signal transmission paths in the phase shifters. In this way, when signals of the antennas pass through the phase shifters, the signals of the antennas can undergo a given phase delay or advance during transmission, thereby implementing directivity adjustment of radiation directions of the signals of the antennas. However, currently, power mechanisms used for phase shifters are large in sizes and heavy in weight, and cannot meet development requirements for miniaturization and light weight of antennas.

### SUMMARY

This application provides a feed network system, an antenna, a base station, and a communication system, to implement a miniaturization and light weight design of an antenna.

According to a first aspect, this application provides a feed network system. The feed network system includes a feed network and a power mechanism. The feed network includes a first housing, a fixed member, and a sliding member, the fixed member and the sliding member are accommodated in the first housing, the fixed member is connected to the first housing, and a functional circuit is disposed on the fixed member. The power mechanism includes a drive apparatus, and the drive apparatus is configured to drive the sliding member to slide relative to the fixed member, to change an electrical parameter of the functional circuit. In the feed network system provided in this application, an integration design is used for the feed network and the power mechanism. This can help improve an integration degree of the feed network system, and implement a miniaturization design of the feed network system.

In a possible implementation of this application, the fixed member, the sliding member, and the drive apparatus are integrally designed. This helps improve an integration degree of the feed network system, thereby meeting design requirements for miniaturization and light weight of the feed network system.

In a possible implementation of this application, the power mechanism further includes a second housing, the drive apparatus is mounted on the second housing, and the second housing is fixedly connected to the first housing. This facilitates connection between the power mechanism and the feed network, and may reduce leakage of a magnetic signal that may be generated in the power mechanism, thereby helping reduce interference of the power mechanism to an antenna radiation signal.

In a possible implementation of this application, the drive apparatus may be directly connected to the sliding member, in other words, the drive apparatus may be directly in contact with and be in transmission connection to the sliding member, so that an acting force output by the drive apparatus can be directly transferred to the sliding member. This helps improve efficiency of transferring the acting force between the drive apparatus and the sliding member, and helps reduce a volume of a feed network system.

In a possible implementation of this application, a first opening groove is provided on an end surface, of the first housing, facing the second housing, a second opening groove is provided on an end surface, of the second housing, facing the first housing, and the first opening groove and the second opening groove are provided opposite to each other. In this way, the drive apparatus may be connected to the sliding member through the first opening groove and the second opening groove, thereby helping improve convenience of connection between the drive apparatus and the sliding member.

In a possible implementation of this application, a part of the sliding member is located in the second housing, and the drive apparatus is connected to the part, of the sliding member, located in the second housing. In this way, the feed network and the power mechanism can be designed more compactly, thereby helping reduce the overall volume of the feed network system.

In this application, the drive apparatus may use a plurality of possible forms of disposition. The following describes the drive apparatus by way of example.

In a possible implementation of this application, the drive apparatus includes a resonance assembly, and the resonance assembly includes a metal elastic member and a piezoelectric material layer. The piezoelectric material layer is disposed on at least one surface of the metal elastic member, the metal elastic member includes a drive foot, the drive foot presses against the sliding member, and the drive foot may be configured to drive the sliding member to slide. In this application, the drive apparatus converts microscopic motion of the metal elastic member into macroscopic motion of the sliding member in a piezoelectric driving manner. Due to the small volume of the drive apparatus, this helps reduce a size of the power mechanism, thereby implementing a miniaturization design of the feed network system.

In this implementation, the resonance assembly further includes a power supply module, and the power supply module is configured to apply a voltage to the piezoelectric material layer, so that the piezoelectric material layer drives, under an action of the corresponding voltage, the metal elastic member to deform according to a specified pattern. In this application, the voltage applied to the piezoelectric material layer may be adjusted, to adjust a motion pattern of the metal elastic member, thereby adjusting a motion track of the sliding member driven by the metal elastic member. Therefore, it may be understood that the drive apparatus designed based on a piezoelectric driving principle provided in this application is used, so that the motion track of the sliding member can be adjusted, thereby helping improve flexibility of an integrated design of the power mechanism and the feed network.

In addition, the drive apparatus in the foregoing implementation further includes a forward preloading assembly, and the forward preloading assembly is configured to press the drive foot of the metal elastic member against the sliding member under an action of an elastic force. Therefore, a contact friction force between the drive foot and the sliding member can be effectively improved, to improve reliability of driving the sliding member by the metal elastic member.

On the basis of the design of the foregoing drive apparatus, the power mechanism may further include a driven member, the driven member is located between the drive foot and the sliding member, and the drive foot of the metal elastic member presses against the driven member. The driven member is connected to the sliding member, so that the drive foot can be used to drive the driven member, such that the driven member drives the sliding member to slide. In this implementation, the driven member is used as an adapter part between the drive apparatus and the sliding member, thereby helping improve flexibility of a manner of connection between the drive apparatus and the sliding member.

The driven member and the sliding member may be connected in a plurality of manners. For example, an end portion, of the driven member, facing the sliding member includes a gear, and an end portion, of the sliding member, facing the driven member includes a rack surface, so that transmission connection between the driven member and the sliding member can be implemented by engaging a toothed surface of the gear with the rack surface. In addition, in this implementation, the rack surface engaged with the gear is disposed on the sliding member. This helps improve compactness of the feed network system, and helps reduce the volume of the feed network system.

Alternatively, an end portion, of the driven member, facing the sliding member includes a protrusion, and an end portion, of the sliding member, facing the driven member includes a groove, so that the driven member is connected to the sliding member by inserting the protrusion into the groove. This can help reduce a distance between the driven member and the sliding member, thereby helping implement the miniaturization design of the feed network system.

In another possible implementation of this application, the drive apparatus includes a micro motor. In addition, the power mechanism further includes a gear, an end portion, of the sliding member, facing the gear includes a rack surface, a toothed surface of the gear is engaged with the rack surface, and the micro motor is configured to drive the gear to rotate, so that the gear can drive the sliding member to move. In this implementation, the rack surface engaged with the gear is disposed on the sliding member. This helps improve compactness of the feed network system, and helps reduce the volume of the feed network system.

In another possible implementation of this application, the drive apparatus includes a micro motor, the power mechanism further includes a worm gear, and the sliding member includes a worm, so that the worm gear is engaged with the worm, the micro motor is configured to drive the worm gear to rotate, and the drive apparatus can drive the sliding member to move relative to the fixed member by driving the worm to move by using the worm gear. In this implementation, the worm is disposed on the sliding member. This helps improve compactness of the feed network system, and helps reduce the volume of the feed network system.

In another possible implementation of this application, the drive apparatus includes a micro motor, the power mechanism further includes a worm, an end portion, of the sliding member, facing the worm includes a rack surface, the worm is engaged with the rack surface, and the micro motor is configured to drive the worm to rotate, so that the sliding member is driven to move by using the worm. Such a design helps improve an integration degree of the feed network system, thereby helping implement a miniaturization design of the feed network system.

In another possible implementation of this application, the drive apparatus includes a micro motor, the power mechanism includes a gear, the sliding member includes a toothed surface, a toothed surface of the gear is engaged with the toothed surface of the sliding member, and the micro motor is configured to drive the gear to rotate, so that the gear can drive the sliding member to move. In this implementation, the toothed surface engaged with the gear is disposed on the sliding member. This helps improve compactness of the feed network system, and helps reduce the volume of the feed network system.

In another possible implementation of this application, the drive apparatus includes a linear motor, and an output end of the linear motor is connected to the sliding member. Because a structure of the drive apparatus is simple, this helps reduce a volume of the power mechanism, thereby helping reduce an overall size of the feed network system.

In this application, the feed network may be specifically disposed in a plurality of manners. For example, in a possible implementation, the fixed member includes a metal strip line, the functional circuit is disposed on the metal strip line, another functional circuit is disposed on the sliding member, and the another functional circuit of the sliding member is electrically coupled to the functional circuit of the metal strip line. In the foregoing design manner, in a process in which the sliding member slides relative to the fixed member, the feed network may change the electrical parameter of the functional circuit of the fixed member by changing a manner of coupling electrical connection between the functional circuits of the sliding member and the fixed member.

In this implementation, the feed network may be a reconfigurable network, and the functional circuit of the metal strip line and the another functional circuit of the sliding member may be selected based on a function to be implemented by the feed network. For example, the functional circuit of the metal strip line may include at least one of a power splitter, a bridge, a filter, and a transmission line. The another functional circuit of the sliding member may include at least one of a power splitter, a bridge, a filter, and a transmission line.

In another possible implementation of this application, the fixed member includes a metal strip line, the functional circuit is disposed on the metal strip line, the sliding member includes an insulating dielectric, and the insulating dielectric covers a part of the metal strip line. In this design manner of the feed network, in a process in which the sliding member slides relative to the fixed member, a part, of the metal strip line, covered by the insulating dielectric is changed, thereby changing a dielectric constant of an environment in which the entire metal strip line is located, so that electrical performance of the metal strip line is changed.

In this implementation, the feed network may be a phase shifter, so that the sliding member slides relative to the fixed member to change the dielectric constant of the environment in which the metal strip line is located, thereby changing an electrical length of an antenna signal transmitted by using the metal strip line, to implement adjustment of a phase of the antenna signal by the phase shifter.

In another possible implementation of this application, the fixed member includes a metal strip line, the functional circuit is disposed on the metal strip line, the sliding member includes a metal slider, and the metal slider is electrically coupled to the metal strip line. In the foregoing design manner, in a process in which the sliding member slides relative to the fixed member, the feed network may change the electrical parameter of the functional circuit of the fixed member by changing a manner of coupling electrical connection between the sliding member and the fixed member.

In this implementation, the feed network may also be a phase shifter, so that the sliding member slides relative to the fixed member to change the electrical parameter of the functional circuit of the metal strip line, thereby changing the electrical length of the antenna signal transmitted by using the metal strip line, to implement adjustment of the phase of the antenna signal by the phase shifter.

In this application, a specific arrangement manner of the feed network and the power mechanism is not limited. For example, in a possible implementation, if the first housing is of a hollow structure, the first housing includes a hollow area, and the power mechanism is mounted in the hollow area. In this way, the power mechanism and the feed network can be arranged more compactly, thereby helping implement a miniaturization design of the feed network system.

According to a second aspect, this application further provides an antenna. The antenna includes a control system and at least two feed network systems according to the first aspect. The control system is configured to control a drive apparatus of each feed network system to drive a sliding member to slide relative to a fixed member. In the antenna provided in this application, because a feed network and a power mechanism of the feed network system are designed in an integrated manner, the feed network system may be installed and arranged in the antenna as a whole. This helps reduce space occupied by the feed network system in the antenna, and helps improve flexibility of arranging the feed network system in the antenna, to reduce antenna design complexity, thereby helping meet design requirements for miniaturization and light weight of the antenna.

According to a third aspect, this application further provides a base station. The base station includes a radio frequency processing unit, a baseband processing unit, and the antenna according to the second aspect, and the baseband processing unit is connected to the antenna through the radio frequency processing unit. Because a volume of the antenna provided in this application is small, a quantity of antennas that can be simultaneously disposed in the base station is large. This helps increase a type of a signal that can be radiated by the base station, thereby expanding an application scope of the base station.

According to a fourth aspect, this application further provides a communication system. The communication system includes a terminal and the base station according to the third aspect, and the terminal is communicatively connected to the base station. Communication performance of the communication system provided in this application is good.

### BRIEF DESCRIPTION OF DRAWINGS

FIG. 1 is a diagram of an architecture of a communication system according to an embodiment of this application;
FIG. 2 is a diagram of an application scenario of an antenna according to an embodiment of this application;
FIG. 3 is a diagram of a structure of an antenna according to an embodiment of this application;
FIG. 4 is a diagram of a structure of a feed network system according to an embodiment of this application;
FIG. 5 is an exploded view of the feed network system shown in FIG. 4;
FIG. 6 is a diagram of another structure of a feed network system according to an embodiment of this application;
FIG. 7 is a diagram of another structure of a feed network system according to an embodiment of this application;
FIG. 8 is a diagram of another structure of a feed network system according to an embodiment of this application;
FIG. 9 is an A-A sectional view of the feed network system shown in FIG. 4;
FIG. 10 is a diagram of a structure of a drive apparatus according to an embodiment of this application;
FIG. 11 is a diagram of a structure of a resonance assembly of the drive apparatus shown in FIG. 10;
FIG. 12 is a diagram of a structure of the resonance assembly shown in FIG. 11 from another angle;
FIG. 13 is an enlarged view of a partial structure at B in FIG. 10;
FIG. 14 is a diagram of another manner of connection between a driven member and a sliding member according to an embodiment of this application;
FIG. 15 is a diagram of another structure of a drive apparatus according to an embodiment of this application;
FIG. 16 is an exploded view of the drive apparatus shown in FIG. 15;
FIG. 17 is a diagram of another structure of a drive apparatus according to an embodiment of this application;
FIG. 18 is an exploded view of the drive apparatus shown in FIG. 17;
FIG. 19 is a diagram of another structure of a feed network system according to an embodiment of this application;
FIG. 20 is a diagram of another structure of a feed network system according to an embodiment of this application;
FIG. 21 is a diagram of another structure of a feed network system according to an embodiment of this application;
FIG. 22 is a diagram of another structure of a feed network system according to an embodiment of this application;
FIG. 23 is a diagram of another structure of a feed network system according to an embodiment of this application;
FIG. 24a is a diagram of another structure of a feed network system according to an embodiment of this application;
FIG. 24b is a diagram of another structure of a power mechanism according to an embodiment of this application;
FIG. 25 is a diagram of another structure of a feed network system according to an embodiment of this application; and
FIG. 26 is a diagram of another structure of a feed network according to an embodiment of this application.

### Reference numerals:

1000: base station; 2000: terminal;
100: antenna; 10: radome; 20: antenna connector; 30: radiating element; 40: reflector plate; 50: adjustment unit; 5a: power mechanism;
5b: calibration network; 60: phase shifter;
501: second housing; 5011: second surface; 502: drive apparatus; 5021: apparatus mounting bracket; 50211: guide groove; 50212: limiting groove;
50213: first mounting portion; 502131: first mounting hole; 50214: second mounting portion; 502141: second mounting hole; 5022: resonance assembly;
50221: metal elastic member; 502211: first surface; 502212: second surface; 502213: drive foot; 502214: hollow-out area;
50222: piezoelectric material layer; 50223: power supply module; 50224: drive shaft; 5023: resonance assembly support; 5024: resonance assembly mounting bracket;
50241: mounting groove; 502411: first groove wall; 502412: second groove wall; 5025: lateral preload assembly; 50251: lateral preload elastic member;
50252: first rolling element; 5026: driven member; 50262: protrusion; 50263: gear; 50264: mounting bracket;
50267: first snap-fit portion; 5027: friction member; 50271: friction plate; 50272: clamping portion;
5028: forward preloading assembly; 50281: preload elastic member; 50282: pressing plate; 502821: accommodating groove; 5029: buffer pad; 50210: cover plate;
502110: second rolling element; 502120: linear motor; 503: gear; 503a: gear; 503b: gear; 504: rack;
505: worm gear; 506: worm;
6: feed network; 601: first housing; 6011: first surface; 6012: hollow area; 602: fixed member; 6021: metal strip line;
603: sliding member; 6031: groove; 6032: rack surface;
200: support; 300: radio frequency processing unit; 400: baseband unit; 500: connecting wire; 600: adjustment support; 700: grounding apparatus.

### DESCRIPTION OF EMBODIMENTS

To make objectives, technical solutions, and advantages of this application clearer, the following further describes this application in detail with reference to accompanying drawings. However, example implementations can be implemented in a plurality of forms, and should not be construed as being limited to the implementations described herein. Identical reference numerals in the figure denote identical or similar structures. Therefore, repeated descriptions thereof are omitted. Words that express positions and directions in embodiments of this application are described by using the accompanying drawings as examples. However, changes may also be made as required, and all the changes fall within the protection scope of this application. The accompanying drawings in embodiments of this application are merely used to illustrate relative location relationships and do not represent an actual scale.

It should be noted that details are set forth in the following descriptions for ease of understanding this application. However, this application can be implemented in a plurality of manners different from those described herein, and a person skilled in the art can perform similar promotion without departing from the connotation of this application. Therefore, this application is not limited to specific implementations disclosed below.

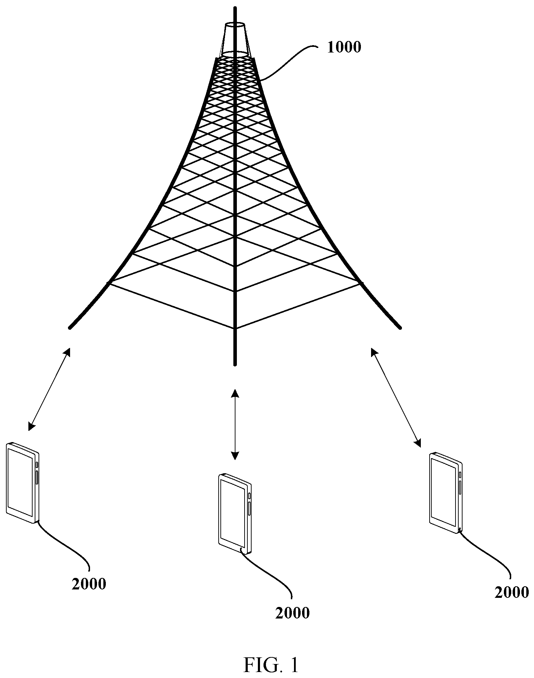

To facilitate understanding of a feed network system, an antenna, and a base station provided in this application, the following first describes application scenarios of the feed network system, the antenna, and the base station. FIG. 1 is an example diagram of an architecture of a communication system to which embodiments of this application are applicable. As shown in FIG. 1, the architecture of the communication system may include a base station 1000 and a terminal 2000. Wireless communication may be implemented between the base station 1000 and the terminal 2000. The base station 1000 may also be referred to as an access network device or an access node. The base station 1000 may be located in a base station subsystem (base station subsystem, BBS), a terrestrial radio access network (UMTS terrestrial radio access network, UTRAN), or an evolved terrestrial radio access network (evolved universal terrestrial radio access, E-UTRAN), and is configured to perform cell coverage of a signal to implement communication between the terminal device and the wireless network. Specifically, the base station 1000 may be a base transceiver station (base transceiver station, BTS) in a global system for mobile communication (global system for mobile communication, GSM) or (code division multiple access, CDMA) system, or may be a NodeB (NodeB, NB) in a wideband code division multiple access (wideband code division multiple access, WCDMA) system, or may be an evolved NodeB (evolved NodeB, eNB, or eNodeB) in a long term evolution (long term evolution, LTE) system, a transmission reception point (transmission reception point, TRP), a next generation base station (next generation NodeB, gNB) in a 5G mobile communication system, a next generation base station in a 6th generation (6th generation, 6G) mobile communication system, an access network device or a module of the access network device in an open access network (open RAN, ORAN) system, a base station in a future mobile communication system, an access node in a Wi-Fi system, or the like. For example, the base station may be a central unit (central unit, CU), a distributed unit (distributed unit, DU), a CU-control plane (control plane, CP), a CU-user plane (user plane, UP), a radio unit (radio unit, RU), or the like described below. In the ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU. The base station 1000 in this application may be a macro base station, a micro base station, an indoor station, a relay node, or a donor node, or may be a radio controller in a cloud radio access network (cloud radio access network, CRAN) scenario. Alternatively, the base station 1000 may be a server, a vehicle-mounted device, a wearable device, a gNodeB (gNodeB or gNB) in a new radio (new radio, NR) system, an access network device in a future evolved network, or the like. For example, a base station in a vehicle to everything (vehicle to everything, V2X) technology may be a road side unit (road side unit, RSU). A plurality of base stations 1000 in the communication system may be base stations of a same type, or may be base stations of different types. The base station 1000 may communicate with the terminal 2000, or may communicate with the terminal 2000 through a relay station. The terminal 2000 may communicate with a plurality of base stations 1000 in different access technologies.

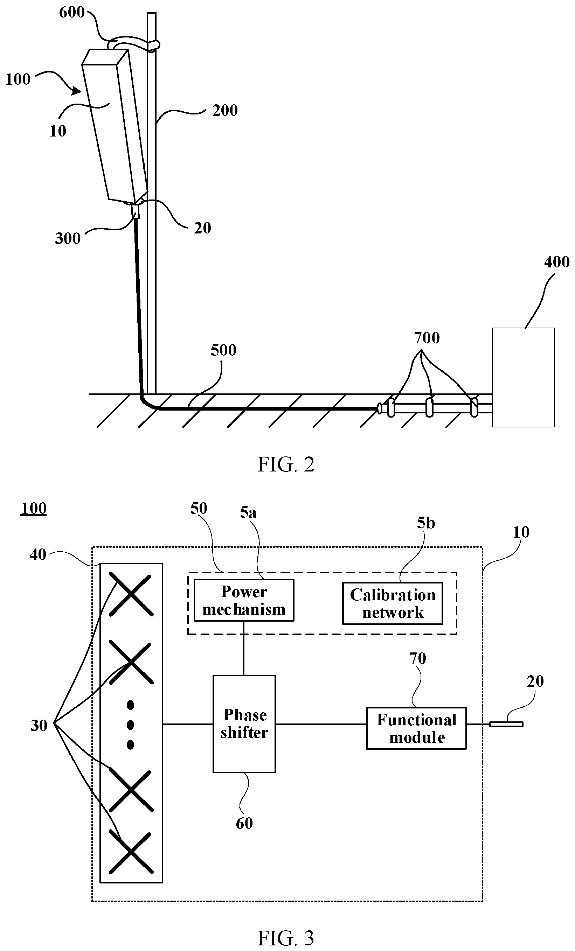

The base station 1000 is equipped with an antenna 100 to implement signal transmission in space. FIG. 2 is a diagram of an application scenario of the antenna 100 with which the base station 1000 is equipped shown in FIG. 1. FIG. 2 shows structures such as a support 200 and an antenna 100. The antenna 100 includes a radome 10. The antenna 100 is fixedly connected to the support 200 such as a pole or a tower by using the radome 10, so that the antenna 100 receives or transmits a signal. The radome 10 has a good electromagnetic wave penetration characteristic in terms of electrical performance, and can withstand impact of a harsh external environment in terms of mechanical performance, so that an antenna system can be protected from impact of the external environment.

The base station 1000 may further include a radio frequency processing unit 300 and a baseband processing unit 400. The antenna 100 is connected to the radio frequency processing unit 300 through an antenna connector 20 located outside the radome 10, and the baseband processing unit 400 may be connected to the antenna 100 through the radio frequency processing unit 300. In some embodiments, the radio frequency processing unit 300 may also be referred to as a remote radio unit (remote radio unit, RRU), and the baseband processing unit 400 may also be referred to as a baseband unit (baseband unit, BBU).

The support 200 is fixedly connected to a ground and is at a specific height away from the ground, and the antenna 100 is fixedly connected to the support 200, so that a radiation distance requirement of the antenna 100 can be met. The antenna 100 is specifically detachably fastened to the support 200 by adjusting the support 600, so that the antenna 100 receives or transmits a signal. In a direction perpendicular to a height of the support 200, an orientation of the antenna 100 may be adjusted by adjusting the support 600.

In a possible embodiment, as shown in FIG. 2, the radio frequency processing unit 300 and the antenna 100 may be integrally disposed, and the baseband processing unit 400 is located at a remote end of the antenna 100. In this case, the radio frequency processing unit 300 and the antenna 100 may be collectively referred to as an active antenna unit (active antenna unit, AAU). It should be noted that FIG. 2 is merely an example of a location relationship between the radio frequency processing unit 300 and the antenna 100. In some other embodiments, both the radio frequency processing unit 300 and the baseband processing unit 400 may alternatively be located at a remote end of the antenna 100. The radio frequency processing unit 300 and the baseband processing unit 400 may be connected through a connecting wire 500.

A grounding apparatus 700 is disposed between the baseband processing unit 400 and the connecting wire 500, and the grounding apparatus 700 usually includes a grounding electrode buried underground. A sealing member may be disposed at a connection point between the antenna 100 and the connecting wire 500, and a sealing member may also be disposed at a connection point between the grounding apparatus 700 and the connecting wire 500. The sealing member may specifically include at least one of an insulation sealing tape and a polyvinyl chloride (polyvinyl chloride, PVC) insulation tape. Certainly, the sealing member may alternatively be another structure, and is not limited to a tape form.

Further, FIG. 3 is a diagram of a structure of an antenna 100 according to an embodiment of this application. As shown in FIG. 3, the antenna 100 may include a radiating element 30 and a reflector plate 40. The radiating element 30 may also be referred to as an antenna element, an element, or the like. The radiating element 30 is a unit that forms a basic structure of an antenna array, and can effectively radiate or receive an antenna signal. Frequencies of different radiating elements 30 may be the same or different. The reflector plate 40 may also be referred to as a baseplate, an antenna panel, a metal reflective surface, or the like. The reflector plate 40 may reflect a received signal and focus the signal on a reception point. The radiating element 30 is usually placed on one side of the reflector plate 40. This not only can greatly enhance a signal receiving or transmitting capability, but also can block and shield an interference signal from a rear side of the reflector plate 40. In this application, the rear side of the reflector plate 40 is a side, of the reflector plate 40, opposite to a side on which the radiating element 30 is disposed.

In the antenna 100, a feed network system is disposed between the radiating element 30 and the antenna connector 20. The feed network system may provide specific power and a specific phase for the radiating element 30. The feed network system may usually include an adjustment unit 50 and a feed network. As shown in FIG. 3, the feed network includes a phase shifter 60. The adjustment unit 50 is configured to implement different radiation beam directions, and the phase shifter 60 is configured to change a maximum direction of signal radiation. The phase shifter 60 performs corresponding adjustment on corresponding radiating elements 30, so that electrical downtilt angles of radiation signals of the radiating elements 30 may be changed, to change radiation directions of the radiating elements 30, thereby meeting a signal coverage requirement.

As shown in FIG. 3, a functional module 70 may be further disposed between the phase shifter 60 and the antenna connector 20. The functional module 70 may extend performance of the antenna 100. For example, the functional module 70 may include one or a combination of at least two of a combiner, a power splitter, a filter, and a microwave circuit. The combiner or the power splitter may be used in a forward or reverse direction to split one signal into a plurality of signals or combine a plurality of signals into one signal. The filter may be configured to filter out an interference signal. In some cases, the phase shifter 60 further has a function of a power splitter or a combiner. In this case, the power splitter or the combiner may be omitted from the feed network system. Different components included in the feed network system may be connected through a transmission line and a connector. It should be noted that the power splitter or the combiner may be located inside or outside the radome 10, and connection relationships between the different components mentioned above are not unique. FIG. 3 shows only one possible location relationship and manner of connection between the components.

Still refer to FIG. 3. The adjustment unit 50 may specifically include a power mechanism 5a and a calibration network 5b. The power mechanism 5a may drive the phase shifter 60 to change directions of different radiation beams of the antenna 100. The calibration network 5b sends a calibration signal to the power mechanism 5a to control the power mechanism 5a to operate.

The phase shifter 60 being a dielectric phase shifter is used as an example. A principle in which the power mechanism 5a drives the phase shifter 60 to change the directions of the different radiation beams of the antenna 100 is as follows: The power mechanism 5a drives an insulating dielectric of the phase shifter 60 to move relative to a metal strip line, to change a relative location of the insulating dielectric and the metal strip line. Because an environment in which the metal strip line of the phase shifter 60 is located has a specific dielectric constant, when the relative location of the insulating dielectric relative to the metal strip line is changed, the dielectric constant of the environment in which the metal strip line is located is changed. The metal strip line may be electrically connected to the radiating element 30 of the antenna 100. In this case, the dielectric constant of the environment in which the metal strip line is located is changed, so that a phase of an antenna signal transmitted by using the metal strip line can be adjusted, thereby implementing directivity adjustment of a radiation direction of the signal of the antenna 100.

In a current antenna, a phase shifter and a power mechanism are usually two parts that are independently designed, that is, the phase shifter and the power mechanism are separately designed, and then are separately installed and arranged in the antenna. In addition, in the current antenna, a power mechanism of a feed network system usually uses a design manner of a rotating motor, a gear rack, and a drive rod. The drive rod is connected to the insulating dielectric of the gear rack and the phase shifter. In this way, the drive rod and the rotating motor can drive the gear to rotate to drive the rack to move in a straight line, so that the drive rod drives the insulating dielectric to move in a straight line relative to the metal wire under driving of the rack. Because the rotating motor has a large volume, and rotating motion of the rotating motor needs to be transferred to the drive rod by using the gear rack before being transferred to the insulating dielectric, there are many intermediate transmission mechanisms between the rotating motor and the insulating dielectric. Consequently, the power mechanism is large in volume and heavy in weight, costs are high, and the feed network system occupies large space in the antenna, and cannot meet development requirements for miniaturization and light weight of the current antenna.

In view of this, in the feed network system provided in this application, the power mechanism and the feed network are designed in an integrated manner, so that the power mechanism and the feed network may be installed and arranged in the antenna as a whole. This helps reduce space occupied by the feed network system in the antenna, thereby helping meet a design requirement for miniaturization of the antenna. For ease of understanding the technical solutions of this application, the following specifically describes a feed network system provided in this application with reference to the accompanying drawings and specific implementations.

In this application, the integration design means that a plurality of structures are directly or indirectly connected, to be moved or installed as a whole. This helps improve compactness of the plurality of structures that use the integration design, and can achieve structure simplification effect by sharing some structures, thereby helping reduce space occupied by the plurality of structures.

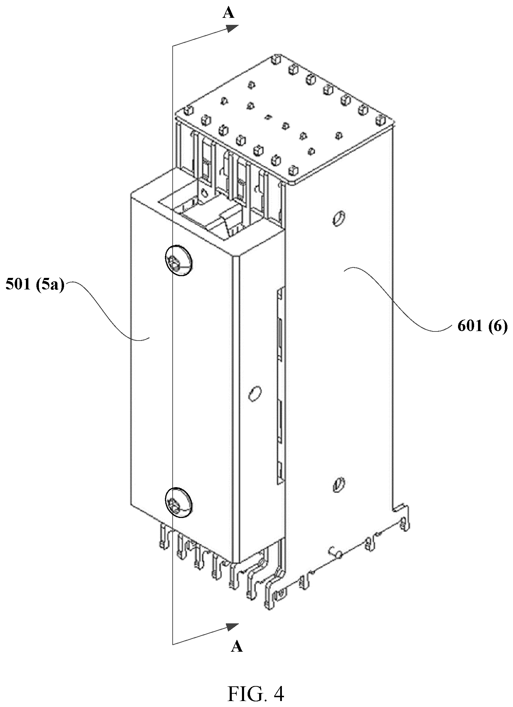

FIG. 4 is a diagram of a structure of a feed network system according to an embodiment of this application. The feed network system includes a feed network 6 and a power mechanism 5a. The feed network 6 includes a first housing 601. The first housing 601 may be used as a support structure of the feed network 6, to ensure structural reliability of the entire feed network 6. In addition, when the first housing 601 may form a closed cavity, the first housing 601 may further perform signal shielding and protection on another structure of the feed network 6. When the feed network 6 has no signal shielding requirement, the first housing 601 may alternatively be of a frame structure, to reduce a weight of the feed network 6.

In addition, in the feed network system shown in FIG. 4, the power mechanism 5a includes a second housing 501, and the first housing 601 is fixedly connected to the second housing 501, so that the feed network 6 and the power mechanism 5a are integrated as a whole. This helps implement a miniaturization design of the feed network system, thereby improving layout flexibility of the feed network system.

It should be noted that a specific manner of connection between the first housing 601 and the second housing 501 is not limited in this application. For example, the first housing 601 and the second housing 501 may be detachably connected in a manner of threaded connection. This helps improve maintenance convenience of the feed network 6 and the power mechanism 5a. In addition, the first housing 601 and the second housing 501 may alternatively be fastened in a manner of welding, riveting, bonding, or the like, to improve reliability of the connection between the first housing 601 and the second housing 501. In addition, the first housing 601 may be directly connected to the second housing 501, or may be indirectly connected to the second housing 501 by using an intermediate adapter structure, provided that the power mechanism 5a and the feed network 6 can be connected integrated as a whole. In some possible embodiments, the first housing 601 and the second housing 501 may alternatively be of an integrated structure, and may make a structure of the feed network system more compact, to help reduce a volume of the feed network system.

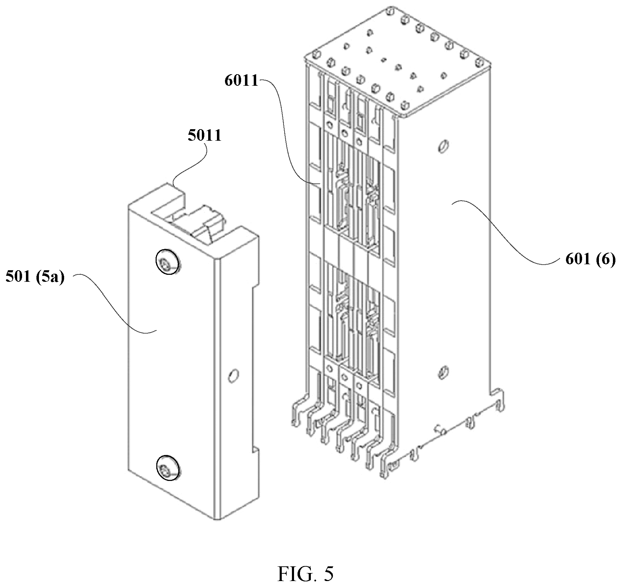

FIG. 5 is an exploded view of the feed network system shown in FIG. 4. In this embodiment of this application, the first housing 601 includes a first surface 6011, and the first surface 6011 is configured to be connected to the second housing 501. In this case, the first surface 6011 is an end surface, of the first housing 601, facing the second housing 501. The first surface 6011 is a hollow-out surface, to facilitate connection between a component in the feed network 6 and a component in the power mechanism 5a. In addition, all other surfaces of the first housing 601 may be closed surfaces, so that the first housing 601 can protect other components in the feed network 6.

In addition, in the feed network system shown in FIG. 5, the second housing 501 includes a second surface 5011, and the second surface 5011 is an end surface, of the second housing 501, facing the first housing 601. The second surface 5011 may be a hollow-out surface, to facilitate connection between the component in the power mechanism 5a and the component in the feed network 6. In addition, all other surfaces of the second housing 501 may be closed surfaces, so that the second housing 501 can protect other components in the power mechanism 5a, and can reduce leakage of a magnetic signal that may be generated in the power mechanism 5a, thereby helping reduce interference of the power mechanism 5a to an antenna radiation signal. Alternatively, in some other possible embodiments of this application, for example, when there is no interference to an antenna radiation signal regardless of whether a magnetic member is disposed in the feed network 6, all surfaces of the second housing 501 may be hollow-out surfaces. In this case, the second housing 501 may be understood as a frame structure. This helps reduce a weight of the power mechanism 5a, thereby reducing an overall weight of the feed network system, and improving convenience of transportation and installation of the feed network system.

In this embodiment of this application, to facilitate connection between the component in the feed network 6 and the component in the power mechanism 5a, in addition to the first surface 6011 of the first housing 601 and the second surface 5011 of the second housing 501 that may be disposed as hollow-out surfaces, a first opening groove (not shown in FIG. 5) may be provided only on the first surface 6011 of the first housing 601, and a part other than the first opening groove on the first surface 6011 may be a closed surface. In addition, a second opening groove (not shown in FIG. 5) is provided on the second surface 5011 of the second housing 501, and a part other than the second opening groove on the second surface 5011 is a closed surface. The first opening groove and the second opening groove are provided opposite to each other. In this way, the component in the feed network 6 may be connected to the component in the power mechanism 5a through the first opening groove and the second opening groove. It may be understood that shapes, sizes, and the like of the first opening groove and the second opening groove may be specifically set based on a design requirement of the components connected between the feed network 6 and the power mechanism 5a. This is not limited in this application.

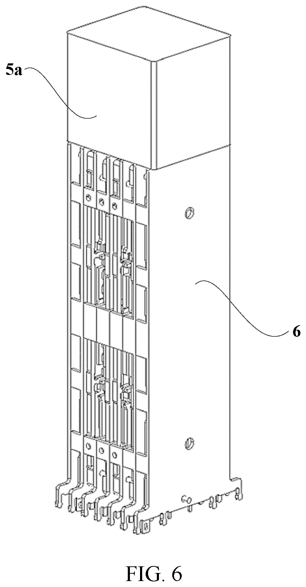

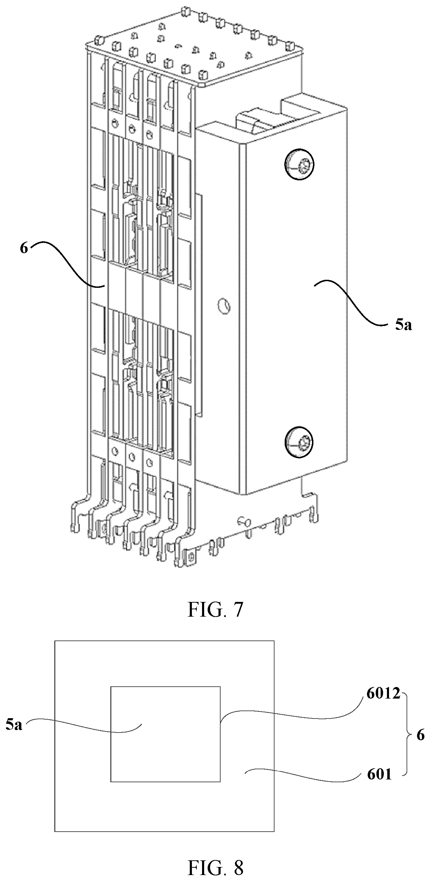

It may be understood that FIG. 4 is a diagram of an arrangement manner of the feed network 6 and the power mechanism 5a. The first surface 6011 is an end surface with a large area of the first housing 601 of the feed network 6. During specific application of the feed network system, an arrangement manner of the feed network 6 and the power mechanism 5a may be adaptively adjusted based on layout space of a specific application scenario, a specific structure of the feed network 6 and the power mechanism 5a, or the like. For example, in the feed network system shown in FIG. 6, the power mechanism 5a is connected to an end surface with a small area of the first housing 601 of the feed network 6. For another example, in the feed network system shown in FIG. 7, the power mechanism 5a is disposed on another end surface with a large area of the feed network 6. In the feed network system shown in FIG. 8, the first housing 601 of the feed network 6 is of a hollow structure, and the first housing 601 includes a hollow area 6012. In this case, the power mechanism 5a may be mounted in the hollow area 6012 of the first housing 601, so that an overall structure formed by assembling the feed network 6 and the power mechanism 5a is more compact. The foregoing describes only several examples of the arrangement manners of the feed network 6 and the power mechanism 5a. Based on this, the arrangement manners of the feed network 6 and the power mechanism 5a may be adaptively deformed. The arrangement manners are not enumerated herein, but should be understood as falling within the protection scope of this application.

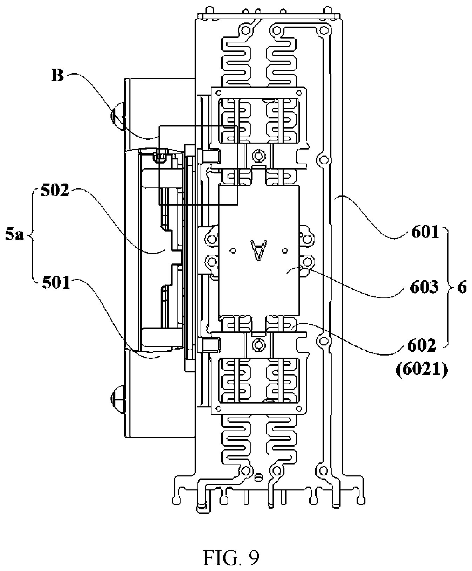

FIG. 9 is an A-A sectional view of the feed network system shown in FIG. 4. The feed network 6 further includes a fixed member 602 and a sliding member 603. The fixed member 602 and the sliding member 603 are mounted on the first housing 601. The fixed member 602 is connected to the first housing 601, and a connection manner thereof may be but is not limited to snap-fitting, riveting, bonding, threaded connection, or the like. In addition, the fixed member 602 may be directly connected to the first housing 601, or may be indirectly connected to the first housing 601 by using a middle connection structure, provided that relative movement between the fixed member 602 and the first housing 601 can be limited.

Still refer to FIG. 9. The power mechanism 5a further includes a drive apparatus 502, and the drive apparatus 502 may be mounted on the second housing 501. In this application, the fixed member 602, the sliding member 603, and the drive apparatus 502 are integrally designed. This helps reduce a volume and a weight of the feed network system.

The drive apparatus 502 may be configured to drive the sliding member 603 to slide relative to the fixed member 602. It may be understood that based on a design requirement of a specific application scenario, the drive apparatus 502 may be specifically disposed, so that the drive apparatus 502 can drive the sliding member 603 to slide relative to the fixed member 602. A sliding track of the sliding member 603 sliding relative to the fixed member 602 may be a straight line or a specified curve. This is not specifically limited in this application.

In addition, it may be understood from the foregoing descriptions of the first housing 601 of the feed network 6 and the second housing 501 of the power mechanism 5a that, when the first surface 6011 of the first housing 601 and the second surface 5011 of the second housing 501 are hollow-out surfaces, the drive apparatus 502 may be connected to the sliding member 603 through hollow-out areas of the first surface 6011 and the second surface 5011. In addition, when the first opening groove is provided on the first surface 6011 of the first housing 601, and the second opening groove is provided on the second surface 5011 of the second housing 501, the drive apparatus 502 may be connected to the sliding member 603 through the first opening groove and the second opening groove. In this case, a sliding track of the sliding member 603 needs to be considered when the first opening groove and the second opening groove are specifically disposed, to avoid interference to movement of the sliding member 603.

It should be noted that in this embodiment of this application, to facilitate the connection between the drive apparatus 502 and the sliding member 603, a part of the sliding member 603 may be located in the second housing 501, and the drive apparatus 502 may be connected to the part, of the sliding member 603, located in the second housing 501.

In addition, in some possible embodiments of this application, the second housing 501 may not be disposed on the power mechanism. It may also be understood as that the feed network 6 and the power mechanism 5a share the first housing 601. This helps simplify a structure of the feed network system, and helps implement a design of miniaturization and light weight of the feed network system.

For ease of understanding of the feed network system provided in this application, as shown in FIG. 9, the following describes a specific disposition manner of the feed network system by using an example in which the feed network 6 is a dielectric phase shifter. In the dielectric phase shifter, the fixed member 602 includes a metal strip line 6021. The metal strip line 6021 may be but is not limited to a sheet metal strip line, and a material of the metal strip line 6021 may be but is not limited to copper. In addition, the fixed member 602 may further include a support (not shown in FIG. 9) made of an insulation material, and the support may be connected to the first housing 601 and the metal strip line 6021, to support the metal strip line 6021. Alternatively, the fixed member 602 includes a printed circuit board, and the metal strip line 6021 is a metal trace on the printed circuit board. In addition, the sliding member 603 in the dielectric phase shifter includes an insulating dielectric.

It may be learned from the foregoing descriptions of the dielectric phase shifter that the metal strip line 6021 may be configured to be connected to a radiating element of an antenna, to implement directivity adjustment of a radiation direction of an antenna signal by the dielectric phase shifter. In view of this, it may be understood that the metal strip line 6021 may be provided with a functional circuit configured to adjust a phase of the antenna signal, and the insulating dielectric of the sliding member 603 covers a part of the metal strip line 6021, so that a part of the metal strip line 6021 can be covered by the insulating dielectric, and the other part of the metal strip line 6021 cannot be covered by the insulating dielectric. In this case, dielectric constants of environments in which the parts of the metal strip line 6021 are located are different. In this way, in a process in which the power mechanism 5a drives the sliding member 603 to slide relative to the fixed member 602, the part, of the metal strip line 6021, covered by the insulating dielectric is changed. As a result, a dielectric constant of an environment in which the entire metal strip line 6021 is located is changed, so that electrical performance of the metal strip line 6021 is changed, and an electrical length of the antenna signal transmitted by using the metal strip line 6021 may be changed, thereby implementing adjustment of a phase of the antenna signal by the dielectric phase shifter.

In this application, the drive apparatus 502 may be directly connected to the sliding member 603, in other words, the drive apparatus 502 may be directly in contact with and be in transmission connection to the sliding member 603, so that an acting force output by the drive apparatus 502 can be directly transferred to the sliding member 603. This helps improve efficiency of transferring the acting force between the drive apparatus 502 and the sliding member 603, and helps reduce a volume of the feed network system.

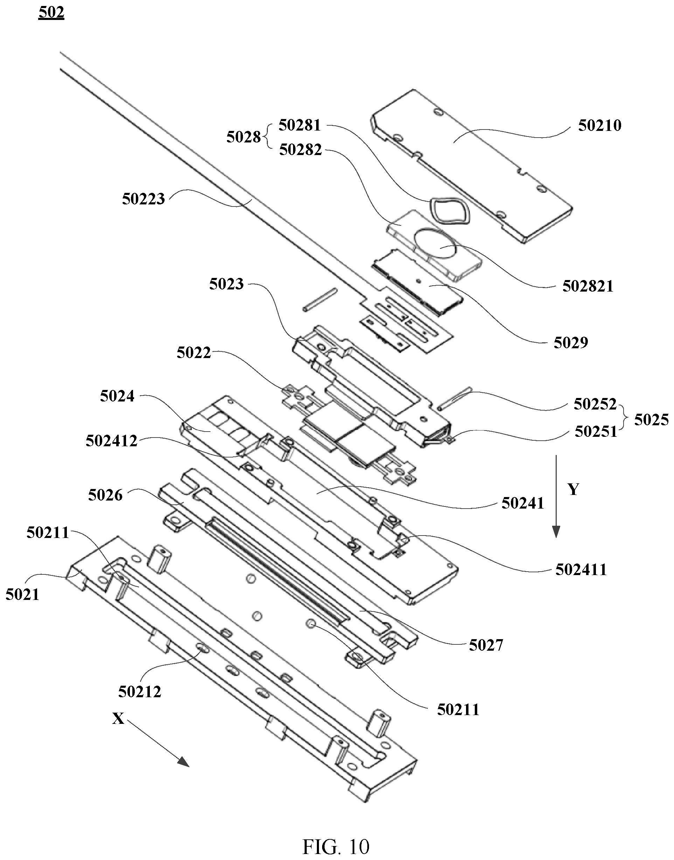

For specific disposition of the drive apparatus 502, still refer to FIG. 9. In this embodiment of this application, the drive apparatus 502 may be a piezoelectric drive apparatus; and for specific disposition of the drive apparatus 502, refer to FIG. 10. FIG. 10 is a diagram of a structure of the drive apparatus 502 according to an embodiment of this application. The drive apparatus 502 includes an apparatus mounting bracket 5021 and a resonance assembly 5022. The apparatus mounting bracket 5021 is fixedly connected to the first housing 601, or the apparatus mounting bracket 5021 is fixedly connected to the second housing 501, or the apparatus mounting bracket 5021 is a part of the second housing 501. In this embodiment of this application, the apparatus mounting bracket 5021 may be used as a support component of the entire drive apparatus 502, to support another structure of the drive apparatus 502.

Still refer to FIG. 9 and FIG. 10, the resonance assembly 5022 is located on a side, of the apparatus mounting bracket 5021, away from the first housing 601. In this application, for ease of description, an arrangement direction of the resonance assembly 5022 and the apparatus mounting bracket 5021 may be defined as a Y direction.

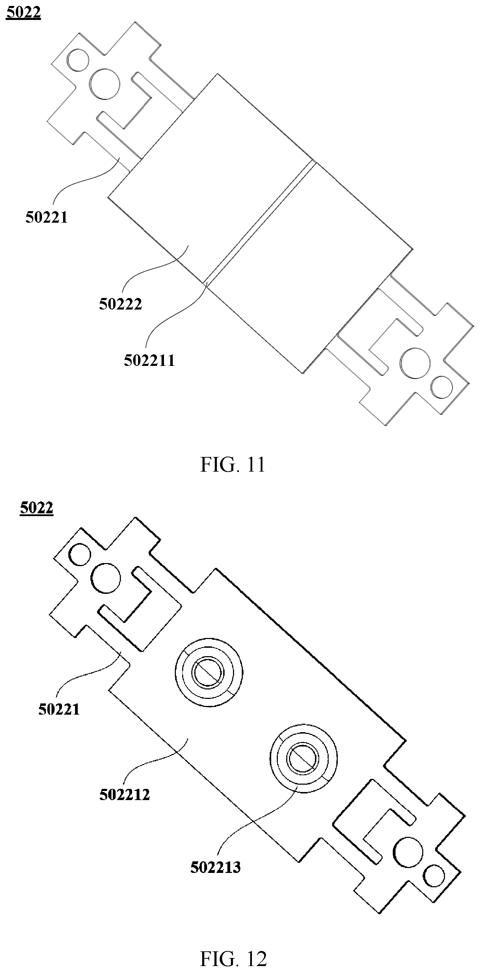

FIG. 11 is a diagram of a structure of the resonance assembly 5022 of the drive apparatus 502 shown in FIG. 10. The resonance assembly 5022 includes a metal elastic member 50221 and a piezoelectric material layer 50222. A material of the metal elastic member 50221 may be a metal material that is prone to deformation, such as stainless steel or phosphorus bronze. The piezoelectric material layer 50222 may include a plurality of piezoelectric ceramic layers disposed in a stacked manner. The piezoelectric material layer 50222 is disposed on at least one surface of the metal elastic member 50221, and the piezoelectric material layer 50222 may be connected to the surface of the metal elastic member 50221 in a manner such as bonding.

In this embodiment of this application, a quantity of piezoelectric material layers 50222 in the resonance assembly 5022 is not limited, and may be selected based on a specific requirement. For example, the resonance assembly 5022 shown in FIG. 11 includes two piezoelectric material layers 50222, the two piezoelectric material layers 50222 are disposed on a first surface 502211 of the metal elastic member 50221, and the first surface 502211 of the metal elastic member 50221 is away from the apparatus mounting bracket 5021. In addition, in the resonance assembly 5022 shown in FIG. 11, the two piezoelectric material layers 50222 are adjacently arranged. In this embodiment of this application, for ease of description, an arrangement direction of the two piezoelectric material layers 50222 in the resonance assembly 5022 shown in FIG. 11 may be defined as an X direction.

FIG. 12 is a diagram of a structure of the resonance assembly 5022 shown in FIG. 11 from another angle. The metal elastic member 50221 further includes a drive foot 502213. The drive foot 502213 is disposed on a second surface 502212 of the metal elastic member 50221. The drive foot 502213 protrudes from the second surface 502212 in a direction from the first surface 502211 to the second surface 502212. The second surface 502212 of the metal elastic member 50221 is disposed opposite to the first surface 502211. A quantity of drive feet 502213 of the metal elastic member 50221 is not limited in this application. For example, in the resonance assembly 5022 shown in FIG. 12, there are two drive feet 502213 of the metal elastic member 50221. Alternatively, in another possible embodiment, there may be one, three, four, or more drive feet 502213 of the metal elastic member 50221.

In this application, the metal elastic member 50221 may be of an integrated structure. In other words, the drive foot 502213 is a part of the metal elastic member 50221, materials of the drive foot 502213 and the metal elastic member 50221 are the same, and the drive foot 502213 and the metal elastic member 50221 are obtained through processing by using one processing process, to simplify the structure of the metal elastic member 50221 and improve production efficiency. Alternatively, the drive foot 502213 may be of an independent structure, and may be fastened to the second surface 502212 of the metal elastic member 50221 in a manner such as welding or bonding. In this case, the drive foot 502213 and the metal elastic member 50221 may be made of a same material or different materials. This helps improve flexibility of disposing the drive foot 502213.

Still refer to FIG. 11. The resonance assembly 5022 further includes a power supply module 50223, and the power supply module 50223 is electrically connected to each piezoelectric material layer 50222, so that the power supply module 50223 can be configured to apply a voltage to each piezoelectric material layer 50222. In this way, when there is a specific phase difference between high-frequency voltages applied by the power supply module 50223 to the two piezoelectric material layers 50222 disposed on the first surface 502211 of the metal elastic member 50221, the metal elastic member 50221 may be driven to deform according to a specified pattern. For example, the metal elastic member 50221 may be driven to perform microscopic elliptic motion, to drive the drive foot 502213 to move synchronously.

The drive apparatus 502 shown in FIG. 10 further includes a resonance assembly support 5023 and a resonance assembly mounting bracket 5024. The metal elastic member 50221 of the resonance assembly 5022 is connected to the resonance assembly support 5023, and the connection manner may be but is not limited to threaded connection, welding, or riveting.

The resonance assembly mounting bracket 5024 is located between the apparatus mounting bracket 5021 and the resonance assembly support 5023, and the resonance assembly mounting bracket 5024 is fixedly connected to the apparatus mounting bracket 5021. The resonance assembly mounting bracket 5024 includes a mounting groove 50241, and the mounting groove 50241 runs through the resonance assembly mounting bracket 5024 in an arrangement direction of the resonance assembly mounting bracket 5024 and the apparatus mounting bracket 5021.

The resonance assembly support 5023 is mounted on the mounting groove 50241 of the resonance assembly mounting bracket 5024, and the resonance assembly support 5023 is in contact with a side, of the resonance assembly mounting bracket 5024, away from the apparatus mounting bracket 5021. It should be noted that in this application, there is no connection relationship between the resonance assembly support 5023 and the resonance assembly mounting bracket 5024, so that when the metal elastic member 50221 of the resonance assembly 5022 performs microscopic elliptic motion according to the specified pattern, the resonance assembly support 5023 may be driven to move synchronously with the metal elastic member 50221.

Still refer to FIG. 10, in the X direction, the mounting groove 50241 includes a first groove wall 502411 and a second groove wall 502412 that are disposed opposite to each other, and a lateral preload assembly 5025 is disposed between the resonance assembly support 5023 and at least one of the first groove wall 502411 and the second groove wall 502412.

In this application, the lateral preload assembly 5025 includes a lateral preload elastic member 50251 and a first rolling element 50252, and the lateral preload elastic member 50251 may be but is not limited to an elastic mechanical part such as a spring plate, a wave spring, a compression spring, or an extension spring. The lateral preload assembly 5025 being disposed between the resonance assembly support 5023 and the first groove wall 502411 is used as an example. One end of the lateral preload elastic member 50251 abuts against the first groove wall 502411, and the other end of the lateral preload elastic member 50251 abuts against the first rolling element 50252, so that under an action of an elastic force of the lateral preload elastic member 50251, the first rolling element 50252 presses against an end portion, of the resonance assembly support 5023, facing the first groove wall 502411. In this way, in a process in which the resonance assembly support 5023 moves with the metal elastic member 50221, the lateral preload assembly 5025 limits motion of the resonance assembly support 5023 in an arrangement direction of the first groove wall 502411 and the second groove wall 502412, thereby avoiding fluttering of the resonance assembly support 5023 in the direction. In addition, because an end surface, of the resonance assembly support 5023, facing the first groove wall 502411 presses against the first rolling element 50252, the lateral preload assembly 5025 is disposed without affecting motion of the resonance assembly support 5023 with the metal elastic member 50221. Therefore, the lateral preload assembly 5025 is disposed between the resonance assembly support 5023 and the first groove wall 502411, so that motion stability of the resonance assembly support 5023 can be effectively improved, thereby improving motion stability of the resonance assembly 5022. This helps improve stability of a driving force output by the resonance assembly 5022 by using the drive foot 502213.

It may be understood that to enable the first rolling element 50252 to be in stable contact with an end portion of the resonance assembly support 5023, a groove may be provided at the end portion, of the resonance assembly support 5023, facing the first groove wall 502411. In this case, at least a part of the first rolling element 50252 may be accommodated in the groove, and a side wall of the first rolling element 50252 is attached to a groove wall of the groove, so that the first rolling element 50252 may roll relative to the groove.

In this embodiment of this application, the first rolling element 50252 may be, for example, a roller. In addition, the lateral preload assembly 5025 may be disposed between the resonance assembly support 5023 and the second groove wall 502412, or the lateral preload assembly 5025 may not be disposed. When the lateral preload assembly 5025 is disposed between the resonance assembly support 5023 and the second groove wall 502412, the lateral preload assembly 5025 may be specifically disposed with reference to the foregoing embodiment. Details are not described herein. Alternatively, only one first rolling element 50252 may be disposed between the resonance assembly support 5023 and the second groove wall 502412, to improve motion stability of the resonance assembly support 5023, and simplify the structure of the piezoelectric drive apparatus.

The power mechanism provided in this application further includes a driven member 5026. The driven member 5026 is configured to be connected to the sliding member 603, so that the driven member 5026 can be located between the drive foot 502213 and the sliding member 603. In this application, the driving force output by the resonance assembly 5022 by using the drive foot 502213 may act on the driven member 5026, to drive the driven member 5026 to move in a straight line. During specific implementation, still refer to FIG. 10. In the Y direction, the driven member 5026 is located between the apparatus mounting bracket 5021 and the resonance assembly 5022, and a surface, of the driven member 5026, facing the resonance assembly 5022 abuts against the drive foot 502213 of the resonance assembly 5022, so that the driven member 5026 moves with the drive foot 502213 under an action of a friction force between the driven member 5026 and the drive foot 502213.

Because the friction force between the driven member 5026 and the drive foot 502213 is a key to ensuring motion stability of the driven member 5026, to increase the friction force between the driven member 5026 and the drive foot 502213, the piezoelectric drive apparatus provided in this application further includes a friction member 5027. In the drive apparatus 502 shown in FIG. 10, the friction member 5027 is disposed on the surface, of the driven member 5026, facing the resonance assembly 5022, so that the drive foot 502213 of the resonance assembly 5022 can abut against a friction plate 50271.

In this application, the friction member 5027 may be a metal sheet. The friction member 5027 is fixedly connected to the surface, of the driven member 5026, facing the resonance assembly 5022, and a connection manner thereof may be but is not limited to welding, bonding, snap-fitting, or the like. Alternatively, if the friction member 5027 and the driven member 5026 are of an integrated structure, the friction member 5027 may be a part with a large friction coefficient formed by using a polishing process on the surface, of the driven member 5026, facing the resonance assembly 5022.

In addition, to ensure that the drive foot 502213 of the resonance assembly 5022 abuts against the driven member 5026, the drive apparatus provided in this embodiment of this application further includes a forward preloading assembly 5028. The forward preloading assembly 5028 is located on a side, of the resonance assembly 5022, away from the apparatus mounting bracket 5021, and the forward preloading assembly 5028 presses the resonance assembly 5022 toward the driven member 5026 under an action of an elastic force. During specific implementation, as shown in FIG. 10, the forward preloading assembly 5028 may include a forward preload elastic member 50281 and a pressing plate 50282. The forward preload elastic member 50281 may be located on a side, of the pressing plate 50282, away from the resonance assembly 5022, so that the forward preload elastic member 50281 presses the pressing plate 50282 toward the resonance assembly 5022 under an action of an elastic force, thereby pressing the resonance assembly 5022 toward the driven member 5026. In this application, the forward preload elastic member 50281 may be but is not limited to an elastic mechanical part such as a spring plate, a wave spring, a compression spring, or an extension spring.

In the drive apparatus 502 shown in FIG. 10, an accommodating groove 502821 may be further provided on a side, of the pressing plate 50282, facing the forward preload elastic member 50281, so that a part of the forward preload elastic member 50281 may be accommodated in the accommodating groove 502821 of the pressing plate 50282, to improve structural reliability of the forward preloading assembly 5028.

It should be noted that in the drive apparatus 502 shown in FIG. 10, because the piezoelectric material layer 50222 is located on a side, of the metal elastic member 50221, facing the forward preloading assembly 5028, to prevent the forward preloading assembly 5028 from damaging the piezoelectric material layer 50222, the piezoelectric drive apparatus may further include a buffer pad 5029. The buffer pad 5029 is located between the forward preloading assembly 5028 and the resonance assembly 5022, and the forward preloading assembly 5028 presses the buffer pad 5029 toward the resonance assembly 5022 under an action of an elastic force. A material of the buffer pad 5029 is not limited in this application. For example, the buffer pad 5029 may be a flexible material layer such as foam.

Still refer to FIG. 10. The piezoelectric drive apparatus further includes a cover plate 50210. The forward preloading assembly 5028 is located between the cover plate 50210 and the resonance assembly 5022. The cover plate 50210 is fixedly connected to the resonance assembly mounting bracket 5024, and a connection manner thereof may be but is not limited to threaded connection, so that the cover plate 50210 is detachably connected to the resonance assembly mounting bracket 5024. This facilitates maintenance or replacement of the resonance assembly 5022. In some possible embodiments, the cover plate 50210 may alternatively be fastened to the resonance assembly mounting bracket 5024 in a manner such as welding, bonding, or riveting, to improve reliability of the connection between the cover plate 50210 and the resonance assembly mounting bracket 5024.

In addition, it may be understood that the forward preload elastic member 50281 of the forward preloading assembly 5028 is located between the cover plate 50210 and the pressing plate 50282, the forward preload elastic member 50281 may abut against the cover plate 50210 and the pressing plate 50282, and the pressing plate 50282 may abut against the resonance assembly 5022. In this way, the forward preloading assembly 5028 may press against the resonance assembly 5022 through the connection between the cover plate 50210 and the resonance assembly mounting bracket 5024, so that the forward preloading assembly 5028 applies positive pressure to the resonance assembly 5022 in a normal direction, and the forward preloading assembly 5028 presses the drive foot 502213 of the resonance assembly 5022 toward the driven member 5026.

It may be learned from the foregoing descriptions that the driven member 5026 may move in a straight line relative to the apparatus mounting bracket 5021 under driving of the resonance assembly 5022. To improve motion stability of the driven member 5026, as shown in FIG. 10, the apparatus mounting bracket 5021 includes a guide groove 50211. It may be understood that the guide groove 50211 is a straight-line sliding groove, and the guide groove 50211 extends in the X direction. In addition, the driven member 5026 may further include a sliding block (not shown in FIG. 10). The sliding block may be located on a side surface, of the driven member 5026, away from the resonance assembly 5022, and the sliding block may be inserted into the guide groove 50211, so that under driving of the resonance assembly 5022, the sliding block of the driven member 5026 may slide along the guide groove 50211.

To improve smoothness of motion of the driven member 5026 relative to the apparatus mounting bracket 5021, the drive apparatus 502 provided in this embodiment of this application further includes a second rolling element 502110. The second rolling element 502110 is located between the driven member 5026 and the apparatus mounting bracket 5021, and both the driven member 5026 and the apparatus mounting bracket 5021 abut against a surface of the second rolling element 502110. In this way, in a process in which the driven member 5026 moves relative to the apparatus mounting bracket 5021, a friction pair between the driven member 5026 and the apparatus mounting bracket 5021 is a rolling friction pair, which can reduce resistance of relative motion between the driven member 5026 and the apparatus mounting bracket 5021, thereby helping reduce power consumption of the drive apparatus 502.

A specific type of the second rolling element 502110 is not limited in this application. For example, the second rolling element 502110 may be a roller or a ball. It may be understood that to improve motion reliability of the second rolling element 502110, at least one of the apparatus mounting bracket 5021 and the driven member 5026 may be further provided with a limiting groove 50212. For example, in FIG. 10, the apparatus mounting bracket 5021 is provided with the limiting groove 50212, and at least a part of the second rolling element 502110 may be accommodated in the limiting groove 50212. In this embodiment of this application, the apparatus mounting bracket 5021 and the driven member 5026 each may be further provided with a limiting groove 50212, and the limiting groove 50212 of the apparatus mounting bracket 5021 and the limiting groove 50212 of the driven member 5026 are provided opposite to each other. In this way, a part of the second rolling element 502110 is located in the limiting groove 50212 of the apparatus mounting bracket 5021, and a part of the second rolling element 502110 is located in the limiting groove 50212 of the driven member 5026.

A quantity of second rolling elements 502110 is not limited in this application. For example, there may be two, three, or more second rolling elements 502110, and the second rolling element 502110 may be specifically disposed based on disposition space between the apparatus mounting bracket 5021 and the driven member 5026. In addition, a shape of the limiting groove 50212 is not limited in this application. For example, a cross-sectional shape of the limiting groove 50212 of the apparatus mounting bracket 5021 may be V-shaped, U-shaped, or the like, and a cross-sectional shape of the limiting groove 50212 of the driven member 5026 may be V-shaped, U-shaped, or the like, to prevent the second rolling element 502110 from being detached from the apparatus mounting bracket 5021 and the driven member 5026.

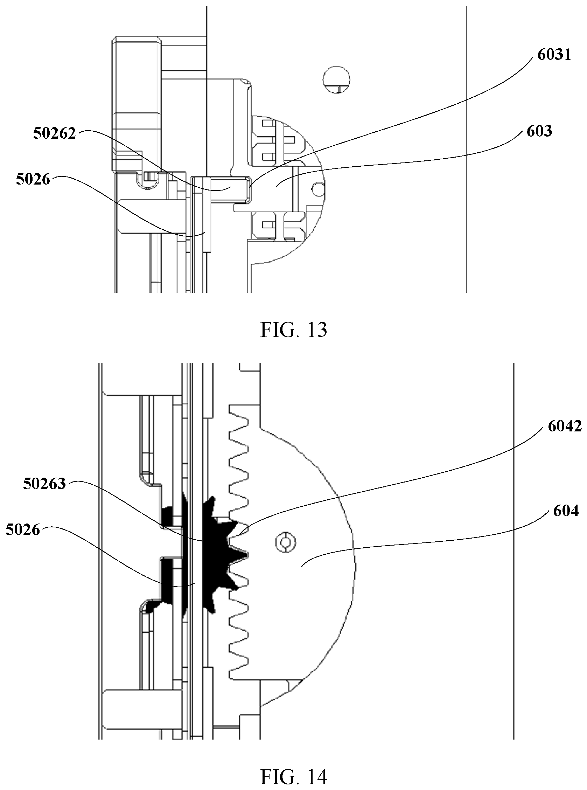

In this application, to facilitate the connection between the driven member 5026 and the sliding member 603, refer to FIG. 13. FIG. 13 is an enlarged view of a partial structure at B in FIG. 10. An end portion, of the driven member 5026, facing the sliding member 603 includes a protrusion 50262, and an end portion, of the sliding member 603, facing the driven member 5026 includes a groove 6031. Alternatively, in some possible embodiments, an end portion, of the sliding member 603, facing the driven member 5026 may further include a protrusion, and an end portion, of the driven member 5026, facing the sliding member 603 includes a groove. In this way, the driven member 5026 and the sliding member 603 may be connected in a snap-fitting manner by inserting the protrusion into the groove.

In addition, FIG. 14 is a diagram of another manner of connection between the driven member 5026 and the sliding member 603 according to an embodiment of this application. An end portion, of the driven member 5026, facing the sliding member includes a gear 50263, an end portion, of the sliding member 603, facing the driven member 5026 includes a rack surface 6032, and a toothed surface of the gear 50263 is engaged with the rack surface 6032. Therefore, the driven member 5026 is in transmission connection to the sliding member 603 in a manner of engaging the toothed surface with the rack surface 6032.

Based on the foregoing descriptions of the manner of the connection between the driven member 5026 and the sliding member 603, the manner of the connection between the driven member 5026 and the sliding member 603 may further be adaptively deformed. For example, the driven member 5026 and the sliding member 603 may be further provided with hooks, and the driven member 5026 and the sliding member 603 are connected through snap-fitting between the hooks, or the driven member 5026 and the sliding member 603 may be connected in a manner such as welding, riveting, or threaded connection. The manners are not enumerated herein, but should be understood as falling within the protection scope of this application.

According to the power mechanism 5a provided in the foregoing embodiment of this application, the drive foot 502213 of the metal elastic member 50221 of the resonance assembly 5022 is in friction contact with the driven member 5026, to convert microscopic motion of the resonance assembly 5022 into macroscopic linear motion of the driven member 5026, so that a linear driving force is directly output in a piezoelectric driving manner, omitting an intermediate transmission mechanism, and the power mechanism is simple in structure, small in volume, and light in weight. In this way, when the power mechanism 5a is applied to the feed network system, this helps implement a miniaturization and light weight design of the feed network system. In addition, because no magnetic mechanical part is disposed in the power mechanism 5a, when the feed network system including the power mechanism 5a is used in the antenna, interference to the signal of the antenna can be avoided, thereby helping improve signal radiation performance of the antenna.

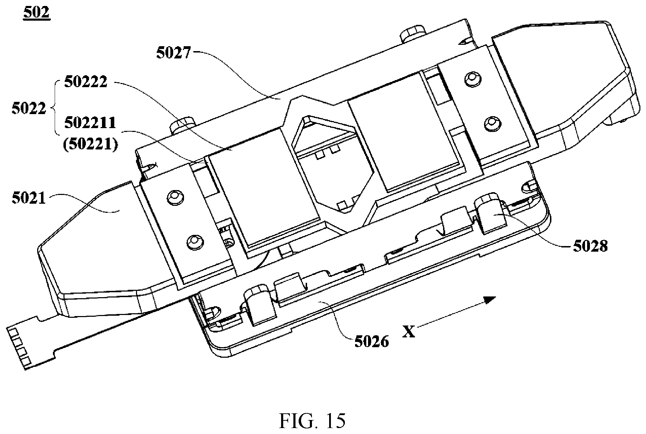

Based on the descriptions of the driving principle of the drive apparatus 502 provided in this application in the foregoing embodiment, a series of variations may be further made to the specific structure of the drive apparatus 502. For example, FIG. 15 is a diagram of another structure of the drive apparatus 502 according to an embodiment of this application. The drive apparatus 502 shown in FIG. 15 is slightly different from that in the foregoing embodiment. Specifically, in the drive apparatus 502 shown in FIG. 15, the resonance assembly 5022 includes four piezoelectric material layers 50222. Two of the four piezoelectric material layers 50222 are disposed on the first surface 502211 of the metal elastic member 50221, and the other two of the four piezoelectric material layers 50222 are disposed on the second surface 502212 of the metal elastic member 50221. FIG. 15 shows only two piezoelectric material layers 50222 disposed on the first surface 502211 of the metal elastic member 50221. In this embodiment of this application, an arrangement direction of the two piezoelectric material layers 50222 disposed on the first surface 502211 of the metal elastic member 50221 is the same as an arrangement direction of the two piezoelectric material layers 50222 disposed on the second surface 502212 of the metal elastic member 50221, and they are all arranged in the X direction.

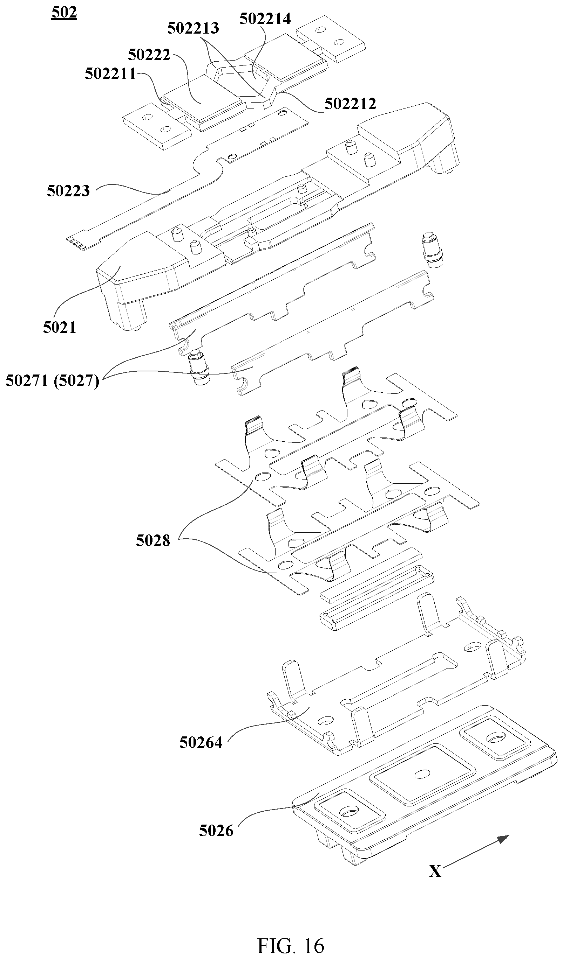

In addition, FIG. 16 is an exploded view of the drive apparatus 502 shown in FIG. 15. The metal elastic member 50221 includes a hollow-out area 502214, the two piezoelectric material layers 50222 disposed on the first surface 502211 of the metal elastic member 50221 are respectively located on two sides of the hollow-out area 502214, and the two piezoelectric material layers 50222 disposed on the second surface 502212 of the metal elastic member 50221 are respectively located on two sides of the hollow-out area 502214.

In a possible embodiment of this application, the two piezoelectric material layers 50222 disposed on the first surface 502211 of the metal elastic member 50221 and the two piezoelectric material layers 50222 disposed on the second surface 502212 of the metal elastic member 50221 may be disposed in a one-to-one correspondence, so that the two piezoelectric material layers 50222 disposed on the first surface 502211 of the metal elastic member 50221 and the two piezoelectric material layers 50222 disposed on the second surface 502212 of the metal elastic member 50221 are symmetrically disposed relative to the metal elastic member 50221. This helps implement the miniaturization design of the resonance assembly 5022, and helps reduce the volume of the drive apparatus 502.

Still refer to FIG. 16. There are two drive feet 502213 of the metal elastic member 50221. The two drive feet 502213 are located on two sides of the hollow-out area 502214. An arrangement direction of the two drive feet 502213 intersects an arrangement direction of two piezoelectric material layers 50222 disposed on a same surface of the metal elastic member 50221. For example, the arrangement direction of the two drive feet 502213 is perpendicular to the arrangement direction of the two piezoelectric material layers 50222 disposed on the same surface of the metal elastic member 50221. In addition, each drive foot 502213 protrudes from a corresponding side surface of the metal elastic member 50221 in a direction away from the hollow-out area 502214.

As shown in FIG. 16, the friction member 5027 is located on a side, of the driven member 5026, facing the resonance assembly 5022. The friction member 5027 is connected to the surface, of the driven member 5026, facing the resonance assembly 5022, and a connection manner thereof may be but is not limited to welding, bonding, snap-fitting, or the like. In addition, the friction member 5027 includes two friction plates 50271 that are disposed opposite to each other. Refer to FIG. 15 and FIG. 16 together. The metal elastic member 50221 is located between the two friction plates 50271, and the two drive feet 502213 abut against the two friction plates 50271 in a one-to-one correspondence. In the drive apparatus 502 shown in FIG. 16 in this application, the surface, of the driven member 5026, facing the resonance assembly 5022 may further include a mounting bracket 50264. The mounting bracket 50264 protrudes from the surface of the driven member 5026 in a direction from the driven member 5026 to the resonance assembly 5022. In this case, the two friction plates 50271 may be connected to the mounting bracket 50264, and connection convenience and reliability of the friction plates 50271 and the driven member 5026 can be improved.

Still refer to FIG. 15 and FIG. 16. The forward preloading assembly 5028 is connected to the surface, of the driven member 5026, facing the resonance assembly 5022, and a connection manner thereof may be but is not limited to welding, bonding, snap-fitting, or the like. The forward preloading assembly 5028 abuts against a surface, of each friction plate 50271, away from the metal elastic member 50221, and the forward preloading assembly 5028 may apply positive pressure to each friction plate 50271 in a normal direction, so that the forward preloading assembly 5028 presses each friction plate 50271 to a corresponding drive foot 502213 under an action of an elastic force.

It should be noted that in the drive apparatus 502 shown in FIG. 16 in this application, the forward preloading assembly 5028 may include a claw-shaped spring plate, at least one elastic claw portion of the claw-shaped spring plate abuts against a surface, of one friction plate 50271, away from the metal elastic member 50221, and at least one elastic claw portion of the claw-shaped spring plate abuts against a surface, of the other friction plate 50271, away from the metal elastic member 50221, to apply positive pressure to each friction plate 50271 in a normal direction, thereby pressing each friction plate 50271 toward the corresponding drive foot 502213. In addition, to increase a friction force between the friction plate 50271 and the drive foot 502213, a pressing force applied by the forward preloading assembly 5028 to the friction plate 50271 may be increased. During specific implementation, the forward preloading assembly 5028 may include two or more claw-shaped spring plates, at least one elastic claw portion of each claw-shaped spring plate abuts against a surface, of one friction plate 50271, away from the metal elastic member 50221, and at least one elastic claw portion of each claw-shaped spring plate abuts against a surface, of the other friction plate 50271, away from the metal elastic member 50221. In addition, two or more claw-shaped spring plates of the forward preloading assembly 5028 are detachably connected, to improve flexibility of disposing the forward preloading assembly 5028.

Other structures of the drive apparatus 502 shown in FIG. 15 and FIG. 16 may be disposed with reference to any one of the foregoing embodiments. Details are not described herein.

In the drive apparatus 502 shown in FIG. 15 and FIG. 16, the power supply module 50223 applies a same voltage to two piezoelectric material layers 50222 disposed on a same surface of the metal elastic member 50221, so that when there is a specific phase difference between high-frequency voltages applied by the power supply module 50223 to piezoelectric material layers 50222 disposed on two surfaces of the metal elastic member 50221, the metal elastic member 50221 may form microscopic elliptic motion according to a specific pattern, thereby driving the drive foot 502213 to move synchronously. In addition, because each drive foot 502213 abuts against a corresponding friction plate 50271, under an action of a friction force between the drive foot 502213 and the corresponding friction plate 50271, the drive foot 502213 drives the friction plate 50271 to move in a straight line, to convert microscopic motion of the resonance assembly 5022 into macroscopic linear motion of the friction plate 50271. In addition, because the friction plate 50271 is connected to the driven member 5026, the driven member 5026 may synchronously move in a straight line with the friction plate 50271.

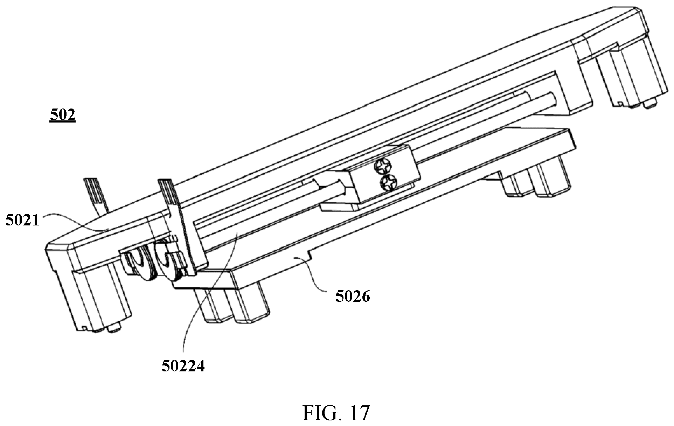

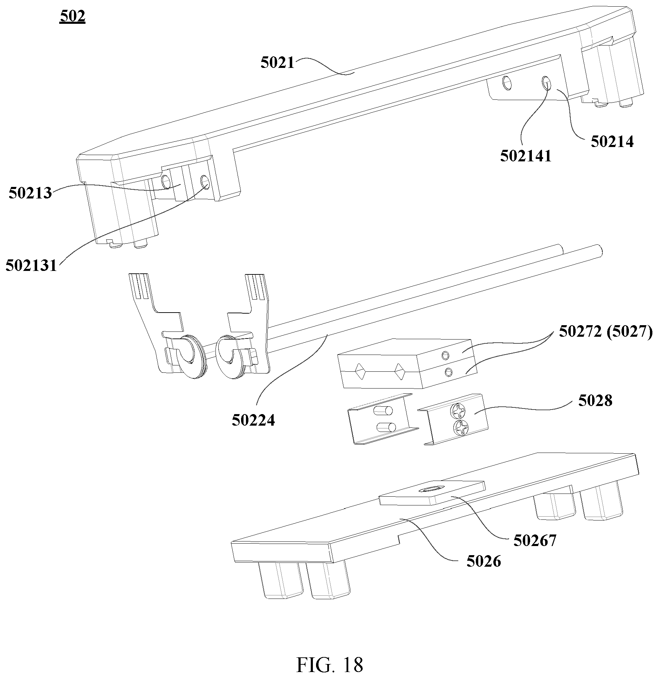

FIG. 17 is a diagram of another structure of the drive apparatus 502 according to an embodiment of this application. In the drive apparatus 502, in addition to the metal elastic member 50221 and the piezoelectric material layer 50222, the resonance assembly 5022 further includes a drive shaft 50224. When the resonance assembly 5022 is specifically disposed, refer to FIG. 18. FIG. 18 is an exploded view of the drive apparatus 502 shown in FIG. 17. The resonance assembly 5022 includes two piezoelectric material layers 50222. One piezoelectric material layer 50222 is disposed on the first surface 502211 of the metal elastic member 50221, and the other piezoelectric material layer 50222 is disposed on the second surface 502212 of the metal elastic member 50221. The drive shaft 50224 passes through the two piezoelectric material layers 50222 and the metal elastic member 50221. The drive foot (not shown in FIG. 18) of the metal elastic member 50221 is connected to the drive shaft 50224, and a connection manner may be but is not limited to bonding. In this way, the drive shaft 50224 may move synchronously with the drive foot, so that the drive shaft 50224 can also be understood as the drive foot of the metal elastic member 50221.

The resonance assembly 5022 is located on one side of the apparatus mounting bracket 5021. The apparatus mounting bracket 5021 includes a first mounting portion 50213 and a second mounting portion 50214 that are disposed opposite to each other. The first mounting portion 50213 includes a first mounting hole 502131, the second mounting portion 50214 includes a second mounting hole 502141, and the drive shaft 50224 sequentially passes through the first mounting hole 502131 and the second mounting hole 502141, so that two ends of the drive shaft 50224 are respectively mounted on the first mounting portion 50213 and the second mounting portion 50214. In addition, in this application, the metal elastic member 50221 may be connected to the first mounting portion 50213, to implement the connection between the metal elastic member 50221 and the apparatus mounting bracket 5021.

Still refer to FIG. 18. In the drive apparatus 502, the friction member 5027 includes two clamping portions 50272, and the two clamping portions 50272 are disposed on two sides of the drive shaft 50224 through snap-fitting, so that the drive shaft 50224 is clamped between the two clamping portions 50272. In this way, the friction member 5027 may move in a straight line along the drive shaft 50224 under driving of a high-frequency linear vibration output by the resonance assembly 5022.

In addition, the forward preloading assembly 5028 may be configured to apply positive pressure to each of the two clamping portions 50272 in a normal direction, to press the two clamping portions 50272 toward the drive shaft 50224, that is, press the friction member 5027 toward the drive shaft 50224, so that the two clamping portions 50272 clamp the drive shaft 50224, thereby increasing a friction force between the clamping portions 50272 and the drive shaft 50224. In this embodiment of this application, the forward preloading assembly 5028 may include two spring plates. The two spring plates are respectively located at two end portions of the friction member 5027 that are disposed opposite to each other. The two spring plates are connected to corresponding end portions of the two clamping portions 50272, and a connection manner thereof may be but is not limited to threaded connection, so that each spring plate presses the corresponding end portions of the two clamping portions 50272.

Refer to FIG. 17 and FIG. 18 together. The friction member 5027 is located between the apparatus mounting bracket 5021 and the driven member 5026, and a first snap-fit portion 50267 is disposed on a surface, of the driven member 5026, facing the friction member 5027. In addition, the two clamping portions 50272 of the friction member 5027 are arranged in a direction from the apparatus mounting bracket 5021 to the driven member 5026. For ease of description, the two clamping portions 50272 may be respectively named as a first clamping portion 50272 and a second clamping portion 50272. The first clamping portion 50272 is close to the driven member 5026 relative to the second clamping portion 50272, so that a second snap-fit portion (not shown in FIG. 18) may be disposed on a surface, of the first clamping portion 50272, facing the driven member 5026. In this way, the first snap-fit portion 50267 of the driven member 5026 may be snap-fitted with the second snap-fit portion of the first clamping portion 50272, so that the first clamping portion 50272 is snap-fitted with the driven member 5026, thereby implementing snap-fitting between the driven member 5026 and the friction member 5027; and the friction member 5027 can drive the driven member 5026 to move in a straight line with the friction member 5027.

In this embodiment of this application, the first snap-fit portion 50267 may be a protrusion or a groove, and the second snap-fit portion may be a groove or a protrusion, provided that the driven member 5026 can be snap-fitted with the first clamping portion 50272. Certainly, the driven member 5026 and the friction member 5027 may alternatively be connected in other possible manners. The manners are not enumerated herein, but should be understood as falling within the protection scope of this application. In addition, in another possible embodiment of this application, the first clamping portion 50272 and the driven member 5026 may be of an integrated structure. This helps improve motion consistency between the driven member 5026 and the friction member 5027, thereby improving driving accuracy of displacement of the driven member 5026 by the resonance assembly 5022, and further helping improve adjustment accuracy of an electrical parameter of the feed network system to which the drive apparatus is applied.

Other structures of the drive apparatus 502 shown in FIG. 17 may be disposed with reference to any one of the foregoing embodiments. Details are not described herein.

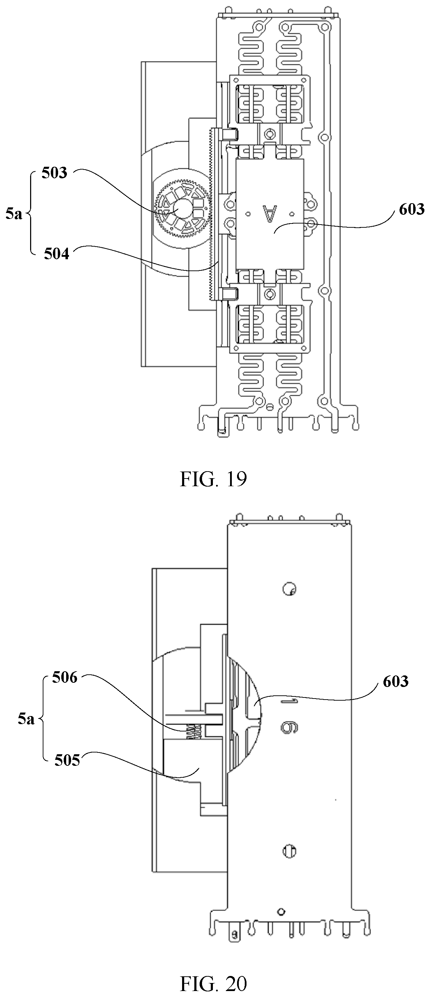

In this embodiment of this application, the drive apparatus 502 of the power mechanism 5a may be some other miniaturized drive apparatuses in addition to the foregoing form that is disposed above based on the piezoelectric driving principle. For example, as shown in FIG. 19, in the feed network system shown in FIG. 19, the drive apparatus 502 of the power mechanism 5a includes a micro motor (not shown in FIG. 19). In addition, the power mechanism 5a further includes a gear 503 and a rack 504, so that the gear 503 and the rack 504 may be used as driven members in the power mechanism 5a. During specific implementation, the gear 503 is engaged with the rack 504, and the rack 504 is connected to the sliding member 603. In this embodiment, the micro motor is configured to drive the gear 503 to rotate. In this way, the rotation of the gear 503 may be converted into straight-line motion of the rack 504, so that the gear 503 drives the rack 504 to move in a straight line, and the rack 504 drives the sliding member 603 to move in a straight line.

It should be noted that in the embodiment shown in FIG. 19, the rack 504 may be an independent mechanical part, so that for connection between the rack 504 and the sliding member 603, refer to the manner of the connection between the driven member 5026 and the sliding member 603 in the embodiments shown in FIG. 13 and FIG. 14. Details are not described herein. In addition, in some possible embodiments, the rack 504 and the sliding member 603 may alternatively be of an integrated structure, that is, a rack surface is disposed at an end portion, of the sliding member 603, facing the drive apparatus 502. In this way, a structure of the power mechanism 5a can be effectively simplified, and a structure of the feed network system can be more compact, thereby helping implement the miniaturization design of the feed network system.

FIG. 20 is a diagram of another structure of the feed network system according to an embodiment of this application. In the feed network system, the drive apparatus 502 of the power mechanism 5a also includes a micro motor (not shown in FIG. 20). In addition, the power mechanism 5a further includes a worm gear 505 and a worm 506, so that the worm gear 505 and the worm 506 may be used as driven members in the power mechanism 5a. During specific implementation, the worm gear 505 is engaged with the worm 506, and the worm 506 is connected to the sliding member 603. In this embodiment, the micro motor may be configured to drive the worm gear 505 to rotate. In this way, the rotation of the worm gear 505 may be converted into straight-line motion of the worm 506, so that the worm 506 drives the sliding member 603 to move in a straight line.

It should be noted that in the embodiment shown in FIG. 20, for connection between the worm 506 and the sliding member 603, refer to the manner of the connection between the driven member 5026 and the sliding member 603 in the embodiments shown in FIG. 13 and FIG. 14. Details are not described herein. In addition, other structures of the feed network system shown in FIG. 20 may be disposed with reference to any one of the foregoing embodiments. Details are not described herein.

In addition, in a possible embodiment of this application, the power mechanism 5a may further include the worm gear 505, and the sliding member 603 includes the worm 506. In this way, the transmission connection between the power mechanism 5a and the sliding member 603 may be implemented in a manner of engaging the worm gear 505 with the worm 506, so that the power mechanism 5a and the feed network 6 can be designed more compactly, thereby helping implement the miniaturization design of the feed network system.

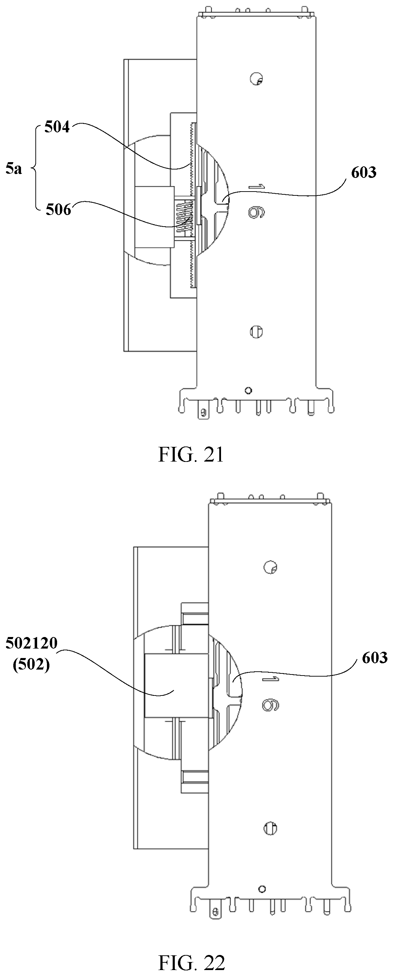

FIG. 21 is a diagram of another structure of the feed network system according to an embodiment of this application. In the feed network system, the drive apparatus 502 of the power mechanism 5a also includes a micro motor (not shown in FIG. 21). In addition, the power mechanism 5a further includes a worm 506 and a rack 504, so that the worm 506 and the rack 504 may be used as driven members in the power mechanism 5a. During specific implementation, the worm 506 is engaged with the rack 504, and the rack 504 is connected to the sliding member 603. In addition, the micro motor may be configured to drive the worm 506 to rotate. In this way, the rotation of the worm 506 may be converted into straight-line motion of the rack 504, so that the rack 504 drives the sliding member 603 to move in a straight line.

It should be noted that in the embodiment shown in FIG. 21, the rack 504 may be an independent mechanical part, so that for connection between the rack 504 and the sliding member 603, refer to the manner of the connection between the driven member 5026 and the sliding member 603 in the embodiments shown in FIG. 13 and FIG. 14. Details are not described herein. In addition, in some possible embodiments, the rack 504 and the sliding member 603 may alternatively be of an integrated structure, that is, a rack surface is disposed at an end portion, of the sliding member 603, facing the drive apparatus 502. In this way, a structure of the power mechanism 5a can be effectively simplified, and a structure of the feed network system can be more compact, thereby helping implement the miniaturization design of the feed network system.

FIG. 22 is a diagram of another structure of the feed network system according to an embodiment of this application. In the feed network system, the drive apparatus 502 of the power mechanism 5a includes a linear motor 502120, and an output end of the linear motor 502120 may be directly connected to the sliding member 603, to drive the sliding member 603 to move in a straight line through the linear motor 502120. In this embodiment, a linear acting force output by the linear motor 502120 may directly act on the sliding member 603, and no intermediate adapter part may be disposed between the linear motor 502120 and the sliding member 603. This helps simplify the structure of the power mechanism 5a, thereby helping implement the miniaturization design of the feed network system.

The foregoing embodiments are merely some example descriptions of the drive apparatus 502 of the power mechanism 5a of the feed network system provided in this application. On this basis, some adaptive variations may be further made to the drive apparatus 502. For example, a structure of the driven member disposed between the drive apparatus 502 and the sliding member 603 may be adjusted, so that the sliding member 603 moves along a specified curve. The variations are not enumerated herein, but should be understood as falling within the protection scope of this application.

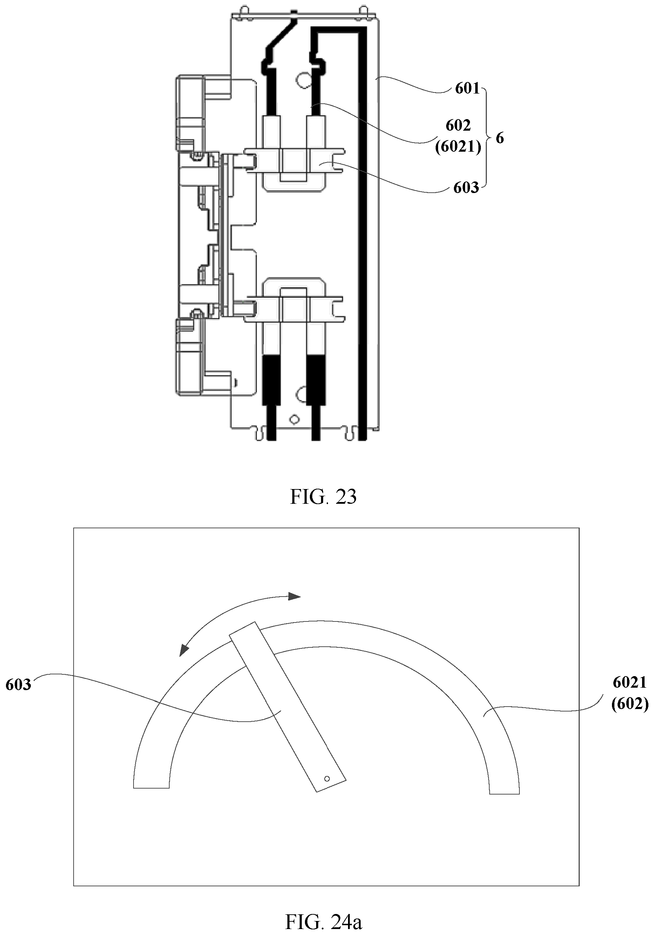

In this application, in addition to being a dielectric phase shifter, the feed network 6 may also be a feed network in another possible disposing form. For example, in the feed network system shown in FIG. 23, the feed network 6 is a physical phase shifter. In the feed network 6, the fixed member 602 includes a metal strip line 6021, and a functional circuit is disposed on the metal strip line 6021. The metal strip line 6021 may be a sheet metal strip line, and a material of the metal strip line 6021 may be but is not limited to copper. In addition, the fixed member 602 may further include a support (not shown in FIG. 23) made of an insulation material, and the support may be connected to the first housing 601 and the metal strip line 6021, to support the metal strip line 6021. Alternatively, the fixed member 602 includes a printed circuit board, and the metal strip line 6021 is a metal trace on the printed circuit board. In addition, the sliding member 603 may be a metal slider, and the metal slider is electrically coupled to the metal strip line 6021 of the fixed member 602. In this case, in the feed network system, a phase of an output port of the phase shifter may be changed by sliding the sliding member 603 relative to the metal strip line 6021 of the fixed member 602.

In the feed network 6 shown in FIG. 23, the phase of the output port of the phase shifter is adjusted by enabling the sliding member 603 to move in a straight line relative to the metal strip line 6021 of the fixed member 602. However, based on a design principle of the feed network 6 shown in FIG. 23, in some possible embodiments of this application, a motion track of the sliding member 603 relative to the metal strip line 6021 of the fixed member 602 may be adaptively adjusted based on a specific application scenario. For example, FIG. 24a is a diagram of another structure of the feed network 6 according to an embodiment of this application. In the feed network 6 shown in FIG. 24a, the sliding member 603 may also be a metal sheet, and the sliding member 603 may swing around a rotation axis center relative to the metal strip line 6021, so that the phase of the output port of the phase shifter may be changed by swinging the sliding member 603 relative to the metal strip line 6021 of the fixed member 602.

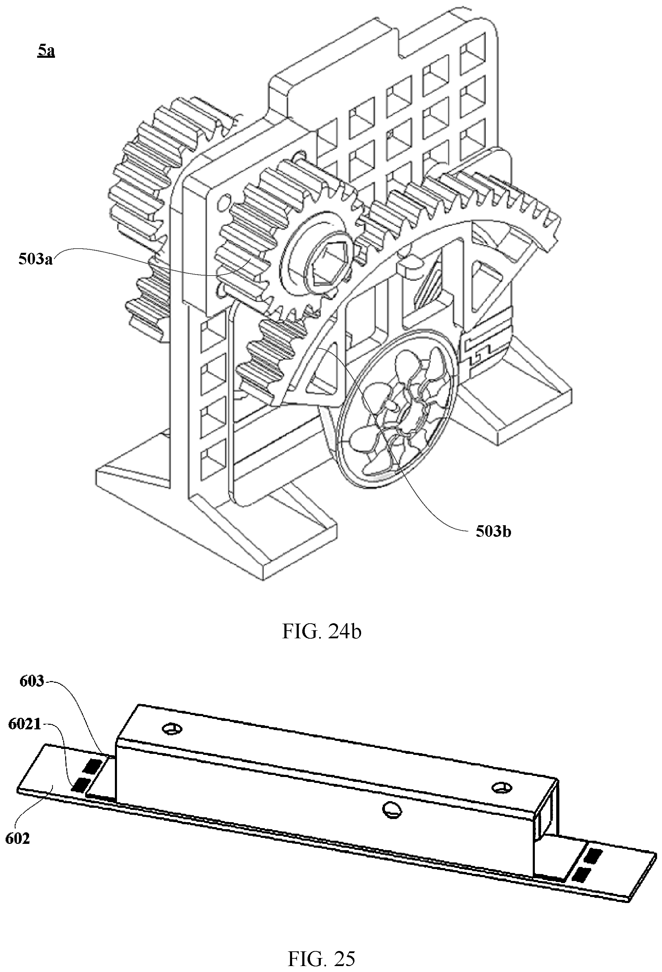

In addition, FIG. 24b is a diagram of another structure of the power mechanism 5a according to an embodiment of this application. The drive apparatus 502 of the power mechanism 5a may be configured to drive the sliding member 603 of the feed network 6 shown in FIG. 24a to swing. The drive apparatus 502 may include a micro motor (not shown in FIG. 24b). In addition, the power mechanism 5a further includes a gear 503a and a gear 503b. The gear 503a is engaged with the gear 503b, the gear 503b is connected to the sliding member 603, and a rotation center of the gear 503b coincides with a rotation center of the sliding member 603. The micro motor is configured to drive the gear 503a to rotate synchronously, so that the gear 503a drives the gear 503b to rotate, and the gear 503b drives the sliding member 603 to swing relative to the metal strip line 6021, to adjust the phase of the output port of the phase shifter.

It may be understood that in this application, at least one of the gear 503a and the gear 503b is a sector gear structure. For example, in the power mechanism 5a shown in FIG. 24b, the gear 503a is a full gear structure, and the gear 503b is a sector gear structure. Such a design helps reduce the volume and the weight of the power mechanism 5a, thereby helping implement the miniaturization design of the feed network system.

In addition, in a possible embodiment of this application, the power mechanism 5a may further include the gear 503a, and the sliding member 603 includes a toothed surface. In this way, the transmission connection between the power mechanism 5a and the sliding member 603 may be implemented in a manner of engaging a toothed surface of the gear 503a and the toothed surface of the sliding member 603, so that the power mechanism 5a and the feed network 6 can be designed more compactly, thereby helping implement the miniaturization design of the feed network system.

FIG. 25 is a diagram of another structure of the feed network system according to an embodiment of this application. In this embodiment, the fixed member 602 of the feed network 6 includes a printed circuit board, and the metal strip line 6021 is a metal trace on the printed circuit board. In addition, another functional circuit is disposed on the sliding member 603. During specific implementation, as shown in FIG. 25, the sliding member 603 also includes a printed circuit board, and the another functional circuit of the sliding member 603 is disposed on the printed circuit board. In this embodiment of this application, the another functional circuit of the sliding member 603 is electrically coupled to the functional circuit of the metal strip line 6021. In this way, the sliding member 603 may slide relative to the metal strip line 6021, so that a topology form of the metal strip line 6021 is changed, and an electrical parameter of the metal strip line 6021 is changed, to reconstruct an electrical function of the metal strip line 6021.

The power mechanism of the feed network system shown in FIG. 25 may be disposed with reference to any one of the foregoing embodiments. Details are not described herein.

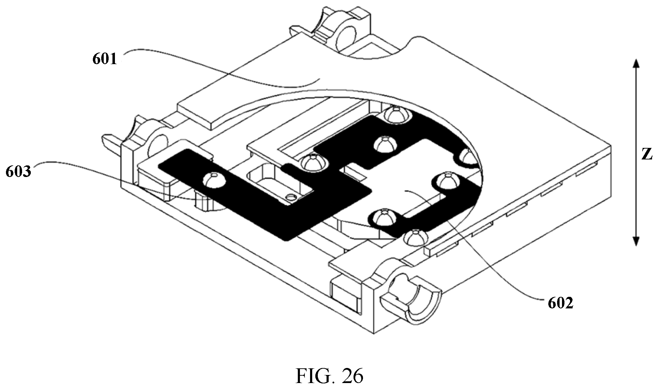

In the foregoing embodiments of this application, a plane on which a sliding track of the sliding member 603 of the feed network 6 is located is parallel to a plane on which the fixed member 602 is located. In another possible embodiment of this application, the plane on which the sliding track of the sliding member 603 is located may alternatively intersect the plane on which the fixed member 602 is located. For example, FIG. 26 is a diagram of another structure of the feed network according to an embodiment of this application. In this embodiment, the metal strip line 6021 of the fixed member 602 of the feed network 6 may be a sheet metal strip line, and a material of the metal strip line 6021 may be but is not limited to copper. In addition, the fixed member 602 may further include a support (not shown in FIG. 26) made of an insulation material, and the support may be connected to the first housing 601 and the metal strip line 6021, to support the metal strip line 6021.

The sliding member 603 of the feed network 6 shown in FIG. 26 may be disposed with reference to the sliding member 603 shown in FIG. 25. Details are not described herein. In addition, in FIG. 26, the sliding member 603 may move in the Z direction relative to the fixed member 602, where the Z direction is perpendicular to the plane on which the fixed member 602 is located, so that the sliding track of the sliding member 603 is perpendicular to the plane on which the fixed member 602 is located.

The power mechanism of the feed network system shown in FIG. 26 may be disposed with reference to any one of the foregoing embodiments. Details are not described herein.

It should be noted that in the feed network system shown in FIG. 25 and FIG. 26, the feed network 6 is a reconfigurable network. In the feed network system, functional circuits of the fixed member 602 and the sliding member 603 may be correspondingly designed based on a specific application scenario. For example, the functional circuit of the fixed member 602 may include at least one of a power splitter, a bridge, a filter, and a transmission line. For example, the another functional circuit of the sliding member 603 includes at least one of a power splitter, a bridge, a filter, and a transmission line.

It may be understood that in this application, a reduction in the volume of the feed network also helps implement the miniaturization design of the feed network system. There are a plurality of specific implementations of the miniaturization design of the feed network. For example, in a possible embodiment of this application, the feed network may include a plurality of sub-functional modules, and functions that may be implemented by the plurality of sub-functional modules may be the same or may be different. In addition, the plurality of sub-functional modules may be stacked in a same direction, or may be stacked in different directions, to ensure that at least two sub-functional modules are on a same projection surface, thereby implementing a layout of the plurality of sub-functional modules in three-dimensional space, and the plurality of sub-functional modules may be electrically connected through an adapter module in a preset connection manner. In this way, internal space of the first housing of the feed network system can be fully utilized, thereby helping implement the miniaturization design of the feed network.

In the foregoing feed network, each sub-functional module may include a fixed member and a sliding member. The fixed member and the sliding member of each sub-functional module may be disposed with reference to any one of the foregoing embodiments. Details are not described herein.

The foregoing embodiments are merely example descriptions of the feed network and the power mechanism provided in this application. On this basis, a series of variations may be made to specific disposition manners of the feed network and the power mechanism, and different feed networks and power mechanisms may be randomly combined based on an actual requirement. The variations are not enumerated herein, but should be understood as falling within the protection scope of this application.

In the feed network system provided in this embodiment of this application, the power mechanism and the feed network are integrated as a whole. This helps implement the miniaturization design of the feed network system, to reduce space occupied by the feed network system in the antenna, thereby improving layout flexibility of the feed network system in the antenna, reducing antenna design complexity, and helping implement the miniaturization design of the antenna.

In addition, when the feed network system provided in the foregoing embodiment of this application is applied to the antenna, the antenna may include at least two feed network systems. Because the feed network system provided in this embodiment of this application may implement a flexible layout in the antenna, in view of this, the at least two feed network systems may share one control system, so that a drive apparatus of each feed network system is controlled by the control system to drive a sliding member to slide relative to a fixed member, thereby further improving an integration degree of the antenna, helping reduce antenna complexity, and helping reduce an overall size of the antenna.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A feed network system, comprising a feed network and a power mechanism, wherein
the feed network comprises a first housing, a fixed member, and a sliding member, the fixed member and the sliding member are mounted on the first housing, the fixed member is connected to the first housing, and a functional circuit is disposed on the fixed member; and
the power mechanism comprises a drive apparatus, and the drive apparatus is configured to drive the sliding member to slide relative to the fixed member, to change an electrical parameter of the functional circuit.

2. The feed network system according to claim 1, wherein the fixed member, the sliding member, and the drive apparatus are integrally designed.

3. The feed network system according to claim 1 or 2, wherein the drive apparatus is directly connected to the sliding member.

4. The feed network system according to any one of claims 1 to 3, wherein the power mechanism further comprises a second housing, the drive apparatus is mounted on the second housing, and the second housing is fixedly connected to the first housing.

5. The feed network system according to claim 4, wherein a first opening groove is provided on an end surface, of the first housing, facing the second housing, a second opening groove is provided on an end surface, of the second housing, facing the first housing, the first opening groove and the second opening groove are provided opposite to each other, and the drive apparatus is connected to the sliding member through the first opening groove and the second opening groove.

6. The feed network system according to claim 4 or 5, wherein a part of the sliding member is located in the second housing, and the drive apparatus is connected to the part, of the sliding member, located in the second housing.

7. The feed network system according to any one of claims 1 to 6, wherein the drive apparatus comprises a resonance assembly, the resonance assembly comprises a metal elastic member and a piezoelectric material layer, the piezoelectric material layer is disposed on at least one surface of the metal elastic member, the metal elastic member comprises a drive foot, the drive foot presses against the sliding member, and the drive foot is configured to drive the sliding member to slide.

8. The feed network system according to claim 7, wherein the resonance assembly further comprises a power supply module, the power supply module is configured to apply a voltage to the piezoelectric material layer, and the piezoelectric material layer drives, under an action of the corresponding voltage, the metal elastic member to deform according to a specified pattern.

9. The feed network system according to claim 7 or 8, wherein the drive apparatus further comprises a forward preloading assembly, and the forward preloading assembly is configured to press the drive foot of the metal elastic member against the sliding member under an action of an elastic force.

10. The feed network system according to any one of claims 7 to 9, wherein the power mechanism further comprises a driven member, the driven member is located between the drive foot and the sliding member, the drive foot of the metal elastic member presses against the driven member, the driven member is connected to the sliding member, and the drive foot is configured to drive the driven member, such that the driven member drives the sliding member to slide.

11. The feed network system according to claim 10, wherein an end portion, of the driven member, facing the sliding member comprises a gear, an end portion, of the sliding member, facing the driven member comprises a rack surface, and a toothed surface of the gear is engaged with the rack surface.

12. The feed network system according to claim 10, wherein an end portion, of the driven member, facing the sliding member comprises a protrusion, an end portion, of the sliding member, facing the driven member comprises a groove, and the protrusion is inserted into the groove.

13. The feed network system according to any one of claims 1 to 6, wherein the drive apparatus comprises a micro motor, the power mechanism further comprises a gear, an end portion, of the sliding member, facing the gear comprises a rack surface, a toothed surface of the gear is engaged with the rack surface, and the micro motor is configured to drive the gear to rotate.

14. The feed network system according to any one of claims 1 to 6, wherein the drive apparatus comprises a micro motor, the power mechanism further comprises a worm gear, the sliding member comprises a worm, the worm gear is engaged with the worm, and the micro motor is configured to drive the worm gear to rotate.

15. The feed network system according to any one of claims 1 to 6, wherein the drive apparatus comprises a micro motor, the power mechanism further comprises a worm, an end portion, of the sliding member, facing the worm comprises a rack surface, the worm is engaged with the rack surface, and the micro motor is configured to drive the worm to rotate.

16. The feed network system according to any one of claims 1 to 6, wherein the drive apparatus comprises a micro motor, the power mechanism comprises a gear, the sliding member comprises a toothed surface, a toothed surface of the gear is engaged with the toothed surface of the sliding member, and the micro motor is configured to drive the gear to rotate.

17. The feed network system according to any one of claims 1 to 6, wherein the drive apparatus is a linear motor, and an output end of the linear motor is connected to the sliding member.

18. The feed network system according to any one of claims 1 to 17, wherein the fixed member comprises a metal strip line, the functional circuit is disposed on the metal strip line, another functional circuit is disposed on the sliding member, and the another functional circuit of the sliding member is electrically coupled to the functional circuit of the metal strip line.

19. The feed network system according to claim 18, wherein the feed network is a reconfigurable network, the functional circuit of the metal strip line comprises at least one of a power splitter, a bridge, a filter, and a transmission line, and the another functional circuit of the sliding member comprises at least one of a power splitter, a bridge, a filter, and a transmission line.

20. The feed network system according to any one of claims 1 to 17, wherein the fixed member comprises a metal strip line, the functional circuit is disposed on the metal strip line, the sliding member comprises an insulating dielectric, and the insulating dielectric covers a part of the metal strip line.

21. The feed network system according to any one of claims 1 to 17, wherein the fixed member comprises a metal strip line, the functional circuit is disposed on the metal strip line, the sliding member comprises a metal slider, and the metal slider is electrically coupled to the metal strip line.

22. The feed network system according to claim 20 or 21, wherein the feed network is a phase shifter.

23. The feed network system according to any one of claims 1 to 22, wherein the first housing is of a hollow structure, the first housing comprises a hollow area, and the power mechanism is mounted in the hollow area.

24. An antenna, comprising a control system and at least two feed network systems according to any one of claims 1 to 23, wherein the control system is configured to control the drive apparatus of each feed network system to drive the sliding member to slide relative to the fixed member.

25. A base station, comprising a radio frequency processing unit, a baseband processing unit, and the antenna according to claim 24, wherein the baseband processing unit is connected to the antenna through the radio frequency processing unit.

26. A communication system, comprising a terminal and the base station according to claim 25, wherein the terminal is communicatively connected to the base station.
